(19) Europäisches Patentamt
European Patent Office
Office européen des brevets

(11) **EP 4 401 012 A1**

(12) **EUROPEAN PATENT APPLICATION**
published in accordance with Art. 153(4) EPC

(43) Date of publication:
**17.07.2024 Bulletin 2024/29**

(21) Application number: **23845033.2**

(22) Date of filing: **25.05.2023**

(51) International Patent Classification (IPC):
**G06N 10/20** *(2022.01)*　　　**G06N 10/60** *(2022.01)*
**G06N 10/40** *(2022.01)*

(52) Cooperative Patent Classification (CPC):
**G06N 10/20; G06N 10/40; G06N 10/60**

(86) International application number:
**PCT/CN2023/096212**

(87) International publication number:
**WO 2024/021819 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.07.2022　CN 202210885994**

(71) Applicant: **Tencent Technology (Shenzhen)
Company Limited
Shenzhen, Guangdong, 518057 (CN)**

(72) Inventors:
• **YUAN, Pei
Shenzhen, Guangdong 518057 (CN)**
• **ZHANG, Shengyu
Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **QUANTUM CIRCUIT OPTIMIZATION METHOD AND APPARATUS, AND ELECTRONIC DEVICE, COMPUTER-READABLE STORAGE MEDIUM AND COMPUTER PROGRAM PRODUCT**

(57)　The present application relates to quantum computing technology. Provided are a quantum circuit optimization method and apparatus, and an electronic device, a computer-readable storage medium and a computer program product. The method comprises: converting, into a unitary matrix to be processed, a quantum circuit to be optimized, and performing iterative decomposition on said unitary matrix, so as to obtain a first number of quantum-bit uniform control gates; decomposing each quantum-bit uniform control gate into a second number of quantum-bit diagonal unitary matrices and a third number of single-quantum-bit gates; on the basis of a connected graph, determining a matching quantum circuit corresponding to each quantum-bit diagonal unitary matrix; integrating a second number of matching quantum circuits and the third number of single-quantum-bit gates, so as to obtain a target quantum circuit of each quantum-bit uniform control gate; and connecting a first number of target quantum circuits, so as to obtain an optimized quantum circuit.

| | |
|---|---|
| Transform a to-be-optimized quantum circuit into a to-be-processed unitary matrix, and decompose the to-be-processed unitary matrix iteratively, to obtain a first quantity of qubit uniformly controlled gates | S101 |
| Decompose each qubit uniformly controlled gate into a second quantity of qubit diagonal unitary matrices and a third quantity of single-qubit gates | S102 |
| Determine, under constraints of a connected graph, a respective matching quantum circuit corresponding to each qubit diagonal unitary matrix | S103 |
| Integrate the second quantity of matching quantum circuits and the third quantity of single-qubit gates, to obtain a respective target quantum circuit for the each qubit uniformly controlled gate | S104 |
| Connect the first quantity of target quantum circuits, to obtain an optimized quantum circuit | S105 |

FIG. 4

**Description**

RELATED APPLICATION

This application is based upon and claims priority to Chinese Patent Application No. 202210885994.4, filed on July 26, 2022, which is incorporated by reference in its entirety.

TECHNICAL FIELD

This application relates to quantum computing technologies, and in particular, to a quantum circuit optimization method and apparatus, an electronic device, a computer-readable storage medium, and a computer program product.

BACKGROUND

A quantity of quantum gates in a quantum circuit correlates with runtime of quantum algorithms. For a purpose of continuing to improve computing efficiency, the quantum circuit may also be optimized to further reduce the runtime of the quantum algorithms.

However, there are a wide variety of constraints on a quantum circuit in a superconducting quantum device, for example, no constraints, constraints of a path, constraints of a tree, and constraints of a connected graph. As a result, if implementation of a circuit corresponding to an arbitrary unitary matrix is promoted based on an existing quantum circuit on which no constraints are imposed, a quantum circuit is poorly optimized.

SUMMARY

Embodiments of this application provide a quantum circuit optimization method and apparatus, an electronic device, a computer-readable storage medium, and a computer program product, to improve optimization of quantum circuits.

Technical solutions in the embodiments of this application are implemented as follows:

An embodiment of this application provides a quantum circuit optimization method, executable by an electronic device. The method includes:

transforming a to-be-optimized quantum circuit into a to-be-processed unitary matrix, and decomposing the to-be-processed unitary matrix iteratively, to obtain a first quantity of qubit uniformly controlled gates;

decomposing each qubit uniformly controlled gate into a second quantity of qubit diagonal unitary matrices and a third quantity of single-qubit gates;

determining, under constraints of a connected graph, a respective matching quantum circuit for each qubit diagonal unitary matrix;

integrating the second quantity of matching quantum circuits and the third quantity of single-qubit gates, to obtain a respective quantum circuit for the each qubit uniformly controlled gate; and

connecting the first quantity of quantum circuits, to obtain an optimized quantum circuit corresponding to the to-be-optimized quantum circuit.

An embodiment of this application provides a quantum circuit optimization apparatus, including:

a matrix decomposition module, configured to: transform a to-be-optimized quantum circuit into a to-be-processed unitary matrix, and decompose the to-be-processed unitary matrix iteratively, to obtain a first quantity of qubit uniformly controlled gates;

a controlled gate decomposition module, configured to decompose each qubit uniformly controlled gate into a second quantity of qubit diagonal unitary matrices and a third quantity of single-qubit gates;

a circuit implementation module, configured to determine, under constraints of a connected graph, a respective matching quantum circuit for each qubit diagonal unitary matrix; and

a connection and integration module, configured to: integrate the second quantity of matching quantum circuits and the third quantity of single-qubit gates, to obtain a respective quantum circuit for the each qubit uniformly controlled gate, and connect the first quantity of quantum circuits, to obtain an optimized quantum circuit corresponding to the to-be-optimized quantum circuit.

An embodiment of this application provides a quantum computing device, the quantum computing device including an optimized quantum circuit, and the optimized quantum circuit being implemented by using the quantum circuit optimization method provided in the embodiment of this application.

An embodiment of this application provides an electronic device, including:

a memory, configured to store executable instructions; and

a processor, configured to implement the quantum circuit optimization method provided in the embodiment of this application when executing the executable instructions stored in the memory.

An embodiment of this application provides a computer-readable storage medium, storing executable instructions, the executable instructions implementing the quantum circuit optimization method provided in the embodiment of this application when being executed by a processor.

An embodiment of this application provides a computer program product, including a computer program or instructions, the computer program or the instructions implementing the quantum circuit optimization method provided in the embodiment of this application when being executed by a processor.

The embodiments of this application have the following beneficial effects: The electronic device first iteratively decomposes the to-be-processed unitary matrix that is obtained through transformation of the to-be-optimized quantum circuit, and then decomposes the qubit uniformly controlled gates that are obtained through decomposition, to obtain the qubit diagonal unitary matrices and the single-qubit gates. The to-be-optimized quantum circuit is of a complex structure. Therefore, without changing functions and while being constrained by the connected graph, the to-be-optimized quantum circuit cannot be optimized. However, a process of implementing a quantum circuit corresponding to a qubit diagonal unitary matrix is simple. Therefore, a problem of optimizing a quantum circuit is converted into a problem of implementing a quantum circuit corresponding to a qubit diagonal unitary matrix, efficiently implementing optimization of a quantum circuit. The electronic device then determines the matching quantum circuits for the qubit diagonal unitary matrices under the constraints of the connected graph, and finally integrates the matching quantum circuits and the single-qubit gates, to obtain the optimized quantum circuit. In this way, an optimal quantum circuit under the constraints of the connected graph is obtained, that is, an optimized quantum circuit that is faster to compute, improving optimization of the quantum circuit. As such, efficiency of quantum computing is improved by optimizing the quantum circuit.

BRIEF DESCRIPTION OF THE DRAWINGS

FIG. 1 is a schematic diagram of constraints of a graph.

FIG. 2 is a schematic diagram of an architecture of a quantum circuit optimization system according to an embodiment of this application.

FIG. 3 is a schematic diagram of a structure of a server in FIG. 2 according to an embodiment of this application.

FIG. 4 is a schematic flowchart of a quantum circuit optimization method according to an embodiment of this application.

FIG. 5 is a schematic diagram of an n-qubit uniformly controlled gate according to an embodiment of this application.

FIG. 6 is a schematic diagram of decomposing a qubit uniformly controlled gate according to an embodiment of this application.

FIG. 7 is a schematic diagram of a connected graph according to an embodiment of this application.

FIG. 8 is a schematic diagram of a decomposition result of a to-be-processed unitary matrix according to an embodiment of this application.

FIG. 9 is another schematic flowchart of a quantum circuit optimization method according to an embodiment of this application.

FIG. 10 is still another schematic flowchart of a quantum circuit optimization method according to an embodiment of this application.

FIG. 11 is a schematic diagram of a reference quantum circuit according to an embodiment of this application.

FIG. 12 is a schematic diagram of numbering qubits according to an embodiment of this application.

FIG. 13 is a schematic diagram of circuit implementation of a controlled-NOT (CNOT) gate under constraints of a path according to an embodiment of this application.

DETAILED DESCRIPTION

To make objectives, technical solutions, and advantages of this application clearer, the following further describes this application in detail with reference to the accompanying drawings. The described embodiments are not to be considered as a limitation on this application. All other embodiments obtained by a person of ordinary skill in the art without creative efforts shall fall within the protection scope of this application.

In the following description, the term "some embodiments" is used and describes subsets of all possible embodiments, but it may be understood that "some embodiments" may be same subsets or different subsets of all the possible embodiments, and can be combined with each other in a case of no conflict.

In the following description, the used terms "first", "second", and "third" are merely intended to distinguish between similar objects rather than describe specific orders for intended objects. It may be understood that "first", "second", and "third" may be interchanged to form specific orders in a case that they are allowed, so that the embodiments of this application described herein can be implemented in an order other than an order illustrated or described herein.

Unless otherwise defined, meanings of all technical and scientific terms used in this specification are the same as those usually understood by a person skilled in the art to which this application belongs. Terms used in this specification are merely intended to describe objectives of the embodiments of this application rather than limit this application.

In the embodiments of this application including the embodiments of both the claims and the specification (hereinafter referred to as "all embodiments of this application"), the used nouns and terms are described and interpreted as follows:

(1) Quantum computation: Quantum computation is a computing method that harnesses properties such as superposition and entanglement of quantum states to quickly complete computing tasks.

(2) Quantum circuit: A quantum circuit is a descriptive model of quantum computation, including qubits and quantum operations acting on the qubits. A quantum circuit includes a series of quantum gates and measurement sequences, with the quantum gates configured to complete computations and the measurement sequences configured to measure results of computations.

(3) Qubit: A qubit is a carrier of quantum information. In quantum computation, the unit of quantum information is a qubit. Qubits are similar to classical bits but have quantum properties of physical atoms.

(4) Quantum gate: A quantum gate is a rudimentary quantum circuit acting on a small quantity of qubits. Quantum gates are the basis of quantum circuits, analogous to a relationship between logic gates and digital circuits. A quantum gate acts on one or two qubits. A quantum gate acting on one qubit is a single-qubit gate. A quantum gate acting on two qubits is a two-qubit gate. Table 1 below shows some quantum gates and their definitions.

Table 1 Quantum gates

| Quantum gate | Definition | Parameter |
|---|---|---|
| Rotation gate $R_Y(\theta)$ | $\begin{bmatrix} cos(\theta/2) & -sin(\theta/2) \\ sin(\theta/2) & cos(\theta/2) \end{bmatrix}$ | $\theta \in \mathbb{R}$ |
| Rotation gate $R_z(\theta)$ | $\begin{bmatrix} e^{-i\theta/2} & \\ & e^{i\theta/2} \end{bmatrix}$ | $\theta \in \mathbb{R}$ |
| R quantum gate R$(\theta)$ | $\begin{bmatrix} 1 & \\ & e^{i\theta} \end{bmatrix}$ | $\theta \in \mathbb{R}$ |

(continued)

| Quantum gate | Definition | Parameter |
|---|---|---|
| Hadamard gate (H) | $\frac{1}{\sqrt{2}}\begin{bmatrix} 1 & 1 \\ 1 & -1 \end{bmatrix}$ | None |
| Phase gate S | $\begin{bmatrix} 1 & \\ & i \end{bmatrix}$ | None |
| Controlled-NOT (CNOT) gate | $CNOT_j^i|x\rangle_i|y\rangle_j = |x\rangle_i|x \oplus y\rangle_j$ | i and j are qubits. |

(5) Unitary matrix: A unitary matrix is used to represent a quantum gate. In other words, an arbitrary quantum gate can be represented by a unitary matrix. A unitary matrix indicates that its Hermitian conjugate is equal to its inverse. For a real matrix, its Hermite conjugate is its transpose. Therefore, a real orthogonal representation means that the transpose of a matrix is equal to the inverse of the matrix.

(6) Connected graph: In an undirected graph, if there is a path from a node i to a node j, the node i and the node j are connected. If any two nodes in an undirected graph are connected, the undirected graph is referred to as a connected graph.

With a feature of quickly completing computing tasks, quantum computation can help solve some problems that are difficult to solve by classical computers. For example, for a problem of decomposing larger numbers, use of quantum computation can achieve an exponential increase in computing efficiency.

A quantity of quantum gates in a quantum circuit corresponds to runtime of quantum algorithms. Therefore, for a purpose of continuing to improve computing efficiency, the quantum circuit may also be optimized to further reduce the runtime of the quantum algorithms.

In the noisy intermediate-scale quantum era (NISQ era), implementation of two-qubit gates (for example, CNOT gates) in superconducting quantum devices is constrained. For example, a two-qubit gate is allowed to act only on specific qubit pairs. Such constraints are referred to as constraints of a graph in the embodiments of this application.

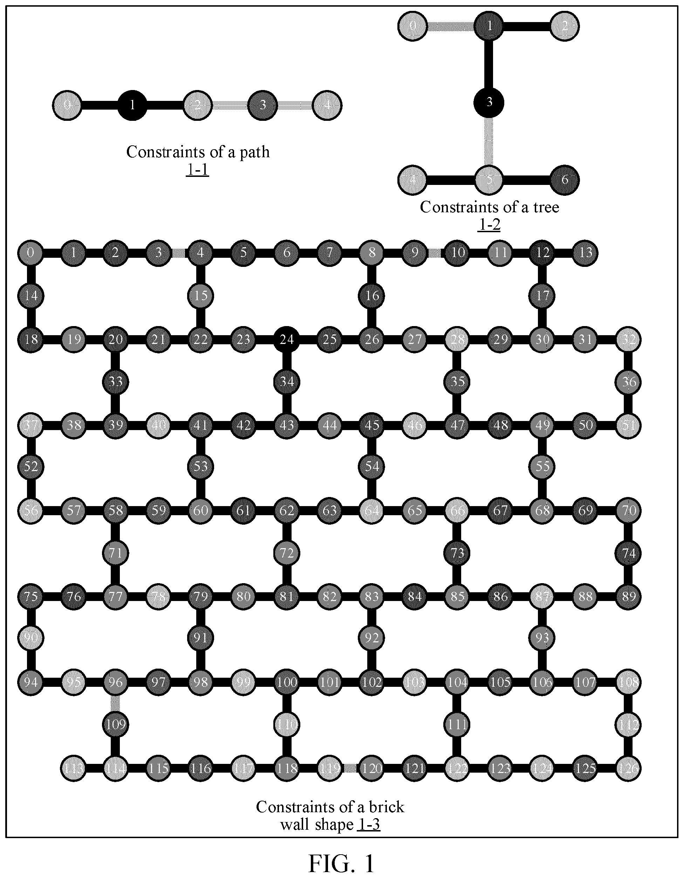

For example, FIG. 1 is a schematic diagram of constraints of a graph. The constraints of a graph in FIG. 1 include constraints of a path 1 -1, constraints of a tree 1-2, and constraints of a brick wall shape 1-3. In FIG. 1, a node represents a qubit, and an edge represents a connection between qubits. The constraints of a graph mean that a two-qubit gate can act only on two qubits that are connected. For example, for the constraints of a path 1-1, 0 and 1 are connected and therefore a CNOT gate can act on 0 and 1, and 0 and 4 are not connected and therefore a CNOT gate cannot act on 0 and 4; for the constraints of a tree 1-2, 1 and 3 are connected and therefore a CNOT gate can act on 1 and 3, and 2 and 6 are not connected and therefore a CNOT gate cannot act on 2 and 6; and for the constraints of a brick wall shape 1-3, 4 and 15 are connected and therefore a CNOT gate can act on 4 and 15, and 15 and 16 are not connected and therefore a CNOT gate cannot act on 15 and 16.

Because an arbitrary quantum circuit can be transformed into a unitary matrix, optimizing a size of a quantum circuit can be converted into a problem of implementing a quantum circuit corresponding to an arbitrary unitary matrix. Therefore, under constraints of a graph $G = (V, E)$, a quantum state preparation circuit may be defined as follows: Given an arbitrary unitary matrix $U = [u_{xy}]_{x,y\in\{0,1\}^n} \in \mathbb{C}^{2^n \times 2^n}$, an n-qubit circuit $C_{US}$ satisfies:

$$|\psi\rangle \xrightarrow{C_{US}} U|\psi\rangle, \quad \forall|\psi\rangle \in \mathbb{C}^{2^n}$$

In the foregoing, $|\psi\rangle$ represents a quantum state. The n-qubit circuit $C_{US}$ includes single-qubit gates and CNOT gates, with positions of the CNOT gates constrained by $G = (V, E)$. In other words, during design of a quantum circuit, only single-qubit gates and CNOT gates are allowed, and the CNOT gates are allowed to act only on two adjacent qubits.

For a problem of optimizing quantum circuits, by using related technologies, a quantum circuit corresponding to an arbitrary unitary matrix is implemented in a case that no constraints are imposed on the circuit, and a quantum circuit addressing a special issue is implemented under constraints of a path; and then the quantum circuit on which no constraints are imposed is promoted to obtain an optimal quantum circuit. However, there are a wide variety of constraints on a quantum circuit in a superconducting quantum device, for example, no constraints, and constraints of a graph such as constraints of a path, constraints of a tree, and constraints of a connected graph. As a result, if implementation of a circuit corresponding to an arbitrary unitary matrix is promoted based on an existing quantum circuit on which no constraints are imposed, it is difficult to obtain an optimal quantum circuit in a progressive sense, and finally a quantum circuit is poorly optimized.

The embodiments of this application provide a quantum circuit optimization method and apparatus, an electronic device, a computer-readable storage medium, and a computer program product, to improve optimization of quantum circuits. The following describes an exemplary application of an electronic device that is configured to optimize quantum circuits and that is provided in an embodiment of this application. The electronic device provided in the embodiment of this application may be implemented as various types of terminals or as servers. The following describes an exemplary application in a case that the electronic device is implemented as a server.

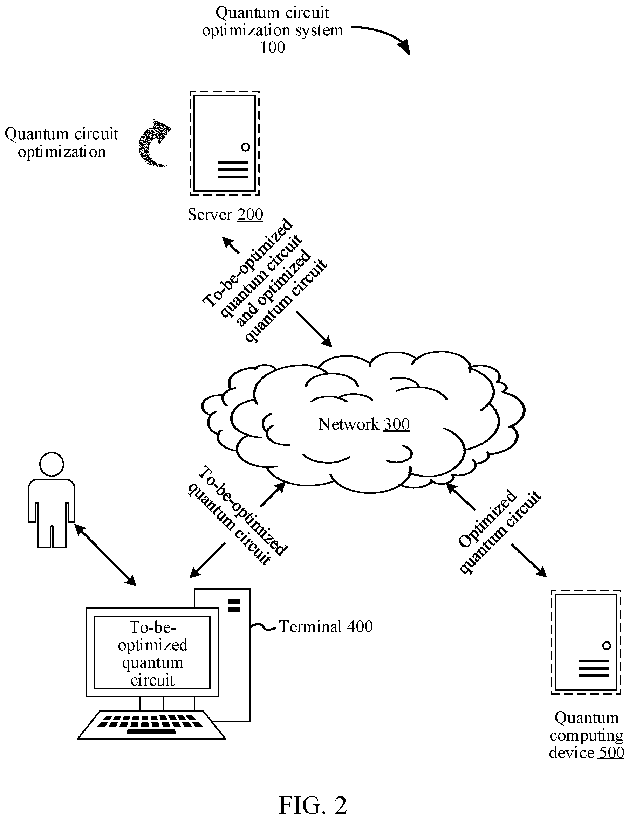

FIG. 2 is a schematic diagram of an architecture of a quantum circuit optimization system according to an embodiment of this application. To support an application of quantum circuit optimization, in the quantum circuit optimization system 100, a terminal 400 and a quantum computing device 500 are connected to a server 200 by using a network 300. The network 300 may be a wide area network or a local area network, or a combination of both.

The terminal 400 is configured to generate a to-be-optimized quantum circuit based on a problem to be solved, and transmit the to-be-optimized quantum circuit to the server 200.

The server 200 is configured to: transform the to-be-optimized quantum circuit into a to-be-processed unitary matrix, and decompose the to-be-processed unitary matrix iteratively, to obtain a first quantity of qubit uniformly controlled gates; decompose each qubit uniformly controlled gate into a second quantity of qubit diagonal unitary matrices and a third quantity of single-qubit gates; determine, under constraints of a connected graph, a matching quantum circuit corresponding to each qubit diagonal unitary matrix; integrate the second quantity of matching quantum circuits and the third quantity of single-qubit gates, to obtain a target quantum circuit of each qubit uniformly controlled gate; and connect the first quantity of target quantum circuits, to obtain an optimized quantum circuit corresponding to the to-be-optimized quantum circuit. In this way, a process of optimizing the quantum circuit is implemented.

The server 200 is further configured to apply the optimized quantum circuit to the quantum computing device 500 (for example, transmit the optimized quantum circuit to a quantum chip fabrication instrument for fabricating a quantum chip corresponding to the optimized quantum circuit, and configure a quantum computing device based on the quantum chip), to improve computing efficiency of the quantum computing device 500 by using the optimized quantum circuit.

In all embodiments of this application, the server 200 may be a standalone physical server, or may be a server cluster or a distributed system including a plurality of physical servers, or may be a cloud server that provides basic cloud computing services such as cloud services, cloud databases, cloud computing, cloud functions, cloud storage, network services, cloud communication, middleware services, domain name services, security services, content delivery networks (CDN), big data, and artificial intelligence platforms. The terminal 400 may be a smartphone, a tablet computer, a notebook computer, a desktop computer, or the like, but is not limited thereto.

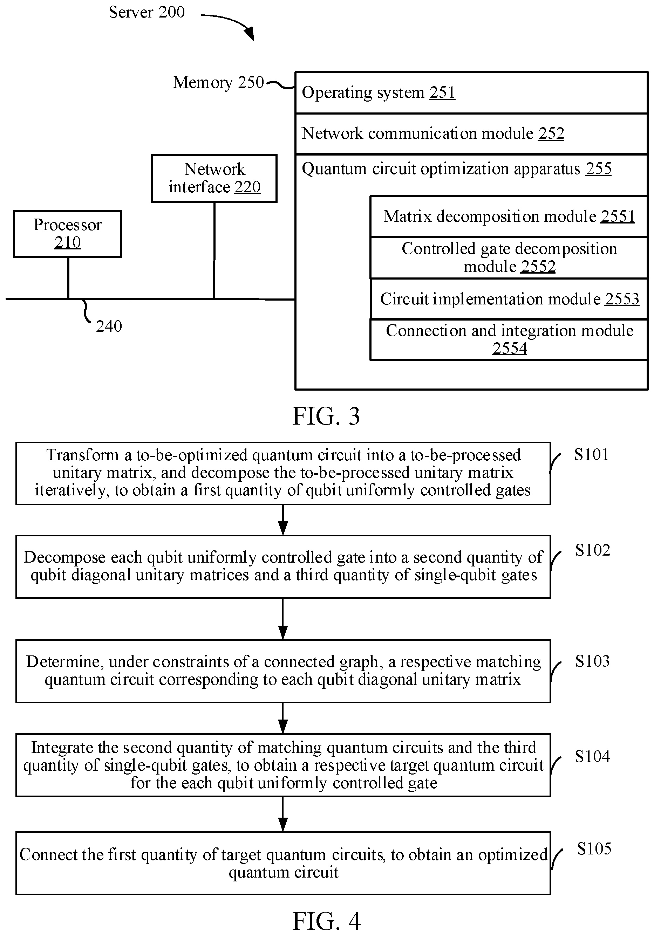

FIG. 3 is a schematic diagram of a structure of a server (an implementation of an electronic device) in FIG. 2 according to an embodiment of this application. The server 200 shown in FIG. 3 includes at least one processor 210, a memory 250, and at least one network interface 220. Components in the server 200 are coupled together by using a bus system 240. It may be understood that the bus system 240 is configured to implement connection and communication between the components. In addition to a data bus, the bus system 240 further includes a power bus, a control bus, and a status signal bus. However, for ease of clear description, all types of buses in FIG. 3 are marked as the bus system 240.

The processor 210 may be an integrated circuit chip with signal processing capabilities, for example, a general-purpose processor, a digital signal processor (DSP), another programmable logic device, a discrete gate or transistor logic device, or a discrete hardware component. The general-purpose processor may be a microprocessor, any conventional processor, or the like.

The memory 250 may be a removable memory, a non-removable memory, or a combination of both. An exemplary hardware device includes a solid-state memory, a hard disk drive, a compact disc drive, and the like. The memory 250 optionally includes one or more storage devices that are physically away from the processor 210.

The memory 250 includes a volatile memory or a nonvolatile memory, or may include both a volatile memory and a nonvolatile memory. The nonvolatile memory may be a read only memory (ROM). The volatile memory may be a random access memory (RAM). The memory 250 described in this embodiment of this application is intended to include any suitable type of memory.

In all embodiments of this application, the memory 250 can store data to support a variety of operations. Examples of the data include a program, a module, a data structure, or a subset or superset thereof. The following provides an exemplary description.

An operating system 251 includes a system program that is configured to process various basic system services and perform hardware-related tasks, for example, a framework layer, a kernel library layer, or a driver layer, and is configured to implement various basic services and process hardware-based tasks.

A network communication module 252 is configured to reach another electronic device by using one or more (wired or wireless) network interfaces 220. Exemplary network interfaces 220 include Bluetooth, wireless fidelity (Wi-Fi), a universal serial bus (USB), and the like.

In all embodiments of this application, a quantum circuit optimization apparatus may be implemented in a form of software. FIG. 3 shows a quantum circuit optimization apparatus 255 stored in the memory 250. The quantum circuit optimization apparatus 255 may be software in forms such as a program and a plug-in, and includes the following software modules: a matrix decomposition module 2551, a controlled gate decomposition module 2552, a circuit implementation module 2553, and a connection and integration module 2554. The modules are logical, and therefore can be combined arbitrarily or further split based on functions implemented. Functions of the modules are described below.

In all embodiments of this application, a quantum circuit optimization apparatus may be implemented in a form of hardware. For example, the quantum circuit optimization apparatus provided in this embodiment of this application may be a processor in a form of a hardware decoding processor. The processor is programmed to perform the quantum circuit optimization method provided in the embodiment of this application. For example, the processor in the form of a hardware decoding processor may use one or more application specific integrated circuits (ASIC), DSPs, programmable logic devices (PLD), complex programmable logic devices (CPLD), field-programmable gate arrays (FPGA), or other electronic elements.

In all embodiments of this application, a terminal or server may implement the quantum circuit optimization method by running a computer program. For example, the computer program may be a native program or software module in an operating system; or may be a native application (APP), that is, a program that needs to be installed in an operating system to run, for example, a circuit optimization APP; or may be an applet, that is, a program that can run after being downloaded into a browser environment; or may be an applet that can be embedded in an arbitrary APP. In summary, the computer program may be an application, a module, or a plug-in in any form.

An embodiment of this application provides a quantum computing device, the quantum computing device including an optimized quantum circuit, and the optimized quantum circuit being implemented by using the quantum circuit optimization method provided in the embodiment of this application.

Before the quantum circuit optimization method provided in the embodiment of this application is described, basic symbols used in the embodiments of this application are first described as follows: $[n]$ represents a set $\{1,2, ...,$ $n\}$; $\mathbb{F}_2$ represents a binary field, and $\oplus$ represents addition in the binary field; for any $x = (x_1, ... , x_n)^T$, $y = (y_1, ... , y_n)^T$ $\in \{0,1\}^n$, an inner product $\langle x, y \rangle = \bigoplus_{i=1}^{n} x_i y_i$, where addition and multiplication are both defined in the binary field; $0^n$ represents a vector that is of length n and has elements of all 0s, and $1^n$ represents a vector that is of length n and has elements of all 1s; a set S is a set of numbers of qubits, $|\psi\rangle_S$ indicates that a quantum state $|\psi\rangle$ includes the qubits in the set S, and if $S = \{q\}$, $|\psi\rangle_S$ is simply denoted as $|\psi\rangle_q$; and if the set S and a set T satisfy $S \subseteq T$, $T - S \overset{\text{def}}{=} \{a: a \in T, \text{and } a \notin S\}$ is defined.

The following describes the quantum circuit optimization method provided in the embodiment of this application with reference to the exemplary application and the implementation of the electronic device provided in the embodiments of this application and to the related basic symbols. FIG. 4 is a schematic flowchart of a quantum circuit optimization method according to an embodiment of this application. The quantum circuit optimization method is described with reference to steps shown in FIG. 4.

S101: Transform a to-be-optimized quantum circuit into a to-be-processed unitary matrix, and decompose the to-be-processed unitary matrix iteratively, to obtain a first quantity of qubit uniformly controlled gates.

The all embodiments of this application are implemented in a scenario in which the to-be-optimized quantum circuit is optimized under constraints of a connected graph, to obtain, by optimizing the to-be-optimized quantum circuit, an optimized quantum circuit that can implement the same functions as the to-be-optimized quantum circuit but has fewer quantum gates (that is, less required computation time). Each quantum circuit has a corresponding unitary matrix. In this embodiment of this application, an electronic device first transforms a to-be-processed quantum circuit into a unitary matrix. The obtained unitary matrix is the to-be-processed unitary matrix. The to-be-optimized quantum circuit is of a complex structure. Therefore, without changing functions and while being constrained by the connected graph, it is difficult to optimize the to-be-optimized quantum circuit. However, a process of implementing a quantum circuit corresponding to a unitary matrix is simple. Therefore, in this embodiment of this application, optimizing a size of a quantum circuit is converted into a problem of implementing a quantum circuit corresponding to an arbitrary unitary matrix.

It may be understood that a quantity of qubits on which the to-be-optimized quantum circuit acts may be set based on an actual situation, for example, set to n (n is a positive integer). In this embodiment of this application, a process of optimizing the to-be-optimized quantum circuit is described by using an example in which the to-be-optimized quantum circuit acts on n qubits.

When the to-be-optimized quantum circuit acts on n qubits, the to-be-processed unitary matrix is an n-qubit unitary matrix. Therefore, a problem of optimizing the to-be-optimized quantum circuit is converted into implementing, under the constraints of the connected graph, a quantum circuit corresponding to the n-qubit unitary matrix.

A quantity of qubits corresponding to the qubit uniformly controlled gates that are obtained through iterative decomposition of the to-be-processed unitary matrix is the same as a quantity of qubits corresponding to the to-be-processed unitary matrix. In other words, when the to-be-processed unitary matrix is an n-qubit unitary matrix, the electronic device decomposes the n-qubit unitary matrix iteratively for n times. After each iterative decomposition is performed, one or more n-qubit uniformly controlled gates (UCG) and a qubit unitary matrix that needs to be further decomposed are obtained. The electronic device continues to decompose the obtained qubit unitary matrix and iterates in this way, until the first quantity of n-qubit uniformly controlled gates are obtained after n iterative decompositions are performed.

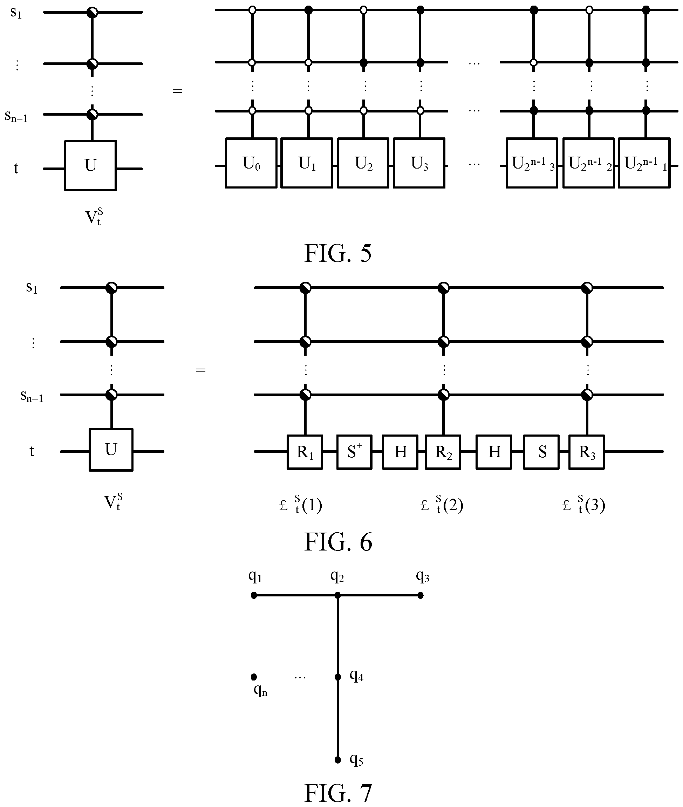

An effect of an n-qubit uniformly controlled gate is to apply different single-qubit gates to a target qubit under $2^{n-1}$ different controls. For example, FIG. 5 is a schematic diagram of an n-qubit uniformly controlled gate according to an embodiment of this application. A set $S = \{s_1, s_2, ..., s_{n-1}\}$ represents numbers of control qubits, and t represents a number of a target qubit. The n-qubit uniformly controlled gate $V_t^S$ includes a series of single-qubit gates $U_0, U_1, ... , U_{2n-1-1}$. When the single-qubit gates $U_0, U_1, ... , U_{2n-1-1}$ are rotation gates $R_z(\theta)$, $V_t^S$ is an n-qubit diagonal unitary matrix, denoted as $\Lambda_t^S$ .

In all embodiments of this application, the decomposing the to-be-processed unitary matrix iteratively in step S101 may be implemented by following the processing process below: letting i be a positive integer that increases sequentially, with $1 \leq i \leq n$ and n being a quantity of qubits, and performing the following processing iteratively based on i: performing matrix decomposition on an initial unitary matrix of an $i^{th}$ iteration, to obtain a decomposition result of the $i^{th}$ iteration, an initial unitary matrix of the first iteration being the to-be-processed unitary matrix; extracting at least one qubit uniformly controlled gate of the $i^{th}$ iteration and generated unitary matrices of the $i^{th}$ iteration from the decomposition result of the $i^{th}$ iteration; and determining the generated unitary matrices of the $i^{th}$ iteration as initial unitary matrices of an $(i+1)^{th}$ iteration; and determining $2^n - 1$ qubit uniformly controlled gates that are obtained after n iterations are performed, as the first quantity of qubit uniformly controlled gates.

i is a positive integer that increases sequentially, $1 \leq i \leq n$, and n is the quantity of qubits. An $i^{th}$ qubit in the qubit uniformly controlled gate of the $i^{th}$ iteration is a target qubit, and remaining n-1 qubits are all control qubits. Qubits corresponding to the generated unitary matrix of the $i^{th}$ iteration is one less than qubits corresponding to the initial unitary matrix of the $i^{th}$ iteration.

For example, when n qubits corresponding to an arbitrary n-qubit unitary matrix (that is, a to-be-processed unitary matrix) are denoted as $\{1,2, ..., n\}$, an electronic device may perform cosine-sine decomposition (that is, matrix decomposition) on the n-qubit unitary matrix. A decomposition result in the following form is obtained:

$$U = \begin{pmatrix} V_{n-1,1} & \\ & V_{n-1,2} \end{pmatrix} \begin{pmatrix} C_{n-1} & S_{n-1} \\ -S_{n-1} & C_{n-1} \end{pmatrix} \begin{pmatrix} V'_{n-1,1} & \\ & V'_{n-1,2} \end{pmatrix} \in \mathbb{C}^{2^n \times 2^n}$$

In the decomposition result, $V_{n-1,1}, V_{n-1,2}, V'_{n-1,1}, V'_{n-1,2} \in \mathbb{C}^{2^{n-1} \times 2^{n-1}}$ are (n-1)-qubit unitary matrices (that is, generated unitary matrices of the first iteration), and $C_{n-1}, S_{n-1} \in \mathbb{C}^{2^{n-1} \times 2^{n-1}}$ are all diagonal matrices, with diagonal elements being $\{\cos(\theta_k) : \theta_k \in \mathbb{R}, k \in [1,2^{n-1}]\}$ and $\{\sin(\theta_k) : \theta_k \in \mathbb{R}, k \in [2^{n-1}]\}$, respectively. $\begin{pmatrix} C_{n-1} & S_{n-1} \\ -S_{n-1} & C_{n-1} \end{pmatrix}$ is an n-qubit uniformly controlled gate with a target qubit being the first qubit (that is, a qubit uniformly controlled gate of the first iteration), denoted as $V_1^{[n]-\{1\}}$ . In this case, cosine-sine decomposition of the first iteration may be written as follows:

$$U = \begin{pmatrix} V_{n-1,1} & \\ & V_{n-1,2} \end{pmatrix} V_1^{[n]-\{1\}} \begin{pmatrix} V'_{n-1,1} & \\ & V'_{n-1,2} \end{pmatrix}$$

$V_{n-1,1}, V_{n-1,2}, V'_{n-1,1}, V'_{n-1,2}$ are (n-1)-qubit unitary matrices, and therefore can further undergo cosine-sine decomposition (that is, matrix decomposition). A decomposition result in the following form is obtained:

$$V_{n-1,i} = \begin{pmatrix} L_{n-2,1}(i) & \\ & L_{n-2,2}(i) \end{pmatrix} \begin{pmatrix} C_{n-2}(i) & S_{n-2}(i) \\ -S_{n-2}(i) & C_{n-2}(i) \end{pmatrix} \begin{pmatrix} R_{n-2,1}(i) & \\ & R_{n-2,1}(i) \end{pmatrix},$$

$$V'_{n-1,i} = \begin{pmatrix} L'_{n-2,1}(i) & \\ & L'_{n-2,2}(i) \end{pmatrix} \begin{pmatrix} C'_{n-2}(i) & S'_{n-2}(i) \\ -S'_{n-2}(i) & C'_{n-2}(i) \end{pmatrix} \begin{pmatrix} R'_{n-2,1}(i) & \\ & R'_{n-2,1}(i) \end{pmatrix}$$

In the decomposition result, $V_{n-1,i} \in \mathbb{C}^{2^{n-1} \times 2^{n-1}}$, $V'_{n-1,i} \in \mathbb{C}^{2^{n-1} \times 2^{n-1}}$, where $i \in [2]$, $L_{n-2,1}(i)$, $L_{n-2,2}(i)$, $L'_{n-2,1}(i)$, $L'_{n-2,1}(i)$, $R_{n-2,1}(i)$, $R_{n-2,2}(i)$, $R'_{n-2,1}(i)$, and $R'_{n-2,1}(i)$ are (n-2)-qubit unitary matrices (that is, generated unitary matrices of the second iteration), and $C_{n-2}(i), S_{n-2}(i), C'_{n-2}(i), C'_{n-2}(i) \in \mathbb{C}^{2^{n-2} \times 2^{n-2}}$ are diagonal matrices, with diagonal elements being $\{\cos(\theta_k): \theta_k \in \mathbb{R}, \; k \in [2^{n-2}]\}$ and $\{\sin(\theta_k): \theta_k \in \mathbb{R}, \; k \in [2^{n-2}]\}$, and $\{\cos(\theta'_k): \theta'_k \in \mathbb{R}, \; k \in [2^{n-2}]\}$ and $\{\sin(\theta'_k): \theta'_k \in \mathbb{R}, \; k \in [2^{n-2}]\}$, respectively. Therefore, the matrix U can be expanded into the following form:

$$U = \begin{pmatrix} L_{n-2,1}(1) & & & \\ & L_{n-2,2}(1) & & \\ & & L_{n-2,1}(2) & \\ & & & L_{n-2,2}(2) \end{pmatrix} \begin{pmatrix} C_{n-2}(1) & S_{n-2}(1) & & \\ -S_{n-2}(1) & C_{n-2}(1) & & \\ & & C_{n-2}(2) & S_{n-2}(2) \\ & & -S_{n-2}(2) & C_{n-2}(2) \end{pmatrix}$$

$$\begin{pmatrix} R_{n-2,1}(1) & & & \\ & R_{n-2,2}(1) & & \\ & & R_{n-2,1}(2) & \\ & & & R_{n-2,2}(2) \end{pmatrix} V_1^{[n]-\{1\}}$$

$$\begin{pmatrix} L'_{n-2,1}(1) & & & \\ & L'_{n-2,2}(1) & & \\ & & L'_{n-2,1}(2) & \\ & & & L'_{n-2,2}(2) \end{pmatrix}$$

$$\begin{pmatrix} C'_{n-2}(1) & S'_{n-2}(1) & & \\ -S'_{n-2}(1) & C'_{n-2}(1) & & \\ & & C'_{n-2}(2) & S'_{n-2}(2) \\ & & -S'_{n-2}(2) & C'_{n-2}(2) \end{pmatrix} \begin{pmatrix} R'_{n-2,1}(1) & & & \\ & R'_{n-2,2}(1) & & \\ & & R'_{n-2,1}(2) & \\ & & & R'_{n-2,2}(2) \end{pmatrix}$$

$$\begin{pmatrix} C_{n-2}(1) & S_{n-2}(1) & & \\ -S_{n-2}(1) & C_{n-2}(1) & & \\ & & C_{n-2}(2) & S_{n-2}(2) \\ & & -S_{n-2}(2) & C_{n-2}(2) \end{pmatrix}$$

The second matrix (that is, ) and the fifth matrix

$$\begin{pmatrix} C'_{n-2}(1) & S'_{n-2}(1) & & \\ -S'_{n-2}(1) & C'_{n-2}(1) & & \\ & & C'_{n-2}(2) & S'_{n-2}(2) \\ & & -S'_{n-2}(2) & C'_{n-2}(2) \end{pmatrix}$$

(that is, ) are n-qubit uniformly controlled gates $V_2^{[n]-\{2\}}$ with a target qubit being the second qubit. The remaining matrices (that is, the generated unitary matrices of the second iteration) are diagonal matrices that need to further undergo cosine-sine decomposition (that is, initial unitary matrices of the third iteration).

Iterations are performed in this way until i is n. In this case, a final expansion of U can be obtained and is a result of a cumulative multiplication of $2^n$ - 1 n-qubit uniformly controlled gates. Therefore, U may be written as follows:

$$U = \prod_{i=1}^{2^n-1} V_{n-\zeta(i)+1}^{[n]-\{n-\zeta(i)+1\}}$$

In the expression, $\zeta(i)$ is calculated by using a ruler function. The ruler function is defined as follows: $\zeta(n) = \max$ $\{ k : 2^k \nmid n \text{ and } 2^{k-1}|n\}$ ($\nmid$ indicates that the former is not divisible by the latter, and | indicates that the former is divisible by the latter).

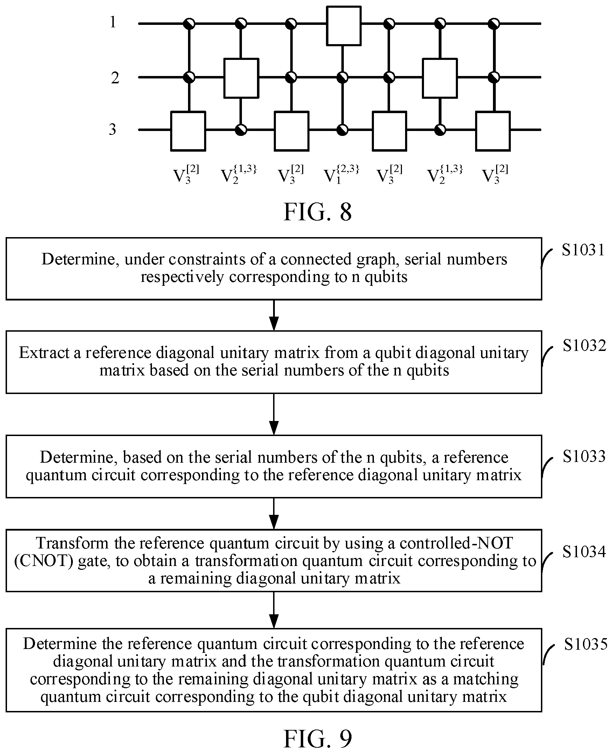

For example, FIG. 8 is a schematic diagram of a decomposition result of a to-be-processed unitary matrix according to an embodiment of this application. The to-be-processed unitary matrix corresponds to three qubits (denoted as 1, 2, and 3), that is, the to-be-processed unitary matrix is a 3-qubit unitary matrix. An electronic device decomposes the 3 -qubit unitary matrix, and can obtain seven 3-qubit uniformly controlled gates, namely, $V_3^{[2]}$ (a target qubit is the third qubit, and control qubits are the first qubit and the second qubit), $V_2^{\{1,3\}}$ (a target qubit is the second qubit, and control qubits are the first qubit and the third qubit), $V_3^{[2]}, V_1^{\{2,3\}}$ (a target qubit is the first qubit, and control qubits are the second qubit and the third qubit), $V_3^{[2]}, V_2^{\{1,3\}}$, and $V_3^{[2]}$.

It can be learned from the foregoing content that to implement a quantum circuit that corresponds to the to-be-processed unitary matrix under the constraints of the connected graph, the electronic device only needs to implement circuits that are of the n-qubit uniformly controlled gates under the constraints of the connected graph.

S102: Decompose each qubit uniformly controlled gate into a second quantity of qubit diagonal unitary matrices and a third quantity of single-qubit gates.

An arbitrary diagonal matrix (a matrix in which elements above and below the principal diagonal are all 0s) in a qubit uniformly controlled gate can be decomposed into rotation gates $R_z(\theta)$, Hadamard gates H, phase gates S, and inverse phase gates $S^\dagger$. Therefore, an electronic device implements decomposition of the qubit uniformly controlled gate by decomposing each diagonal matrix, and obtains qubit diagonal unitary matrices and single-qubit gates. In addition, a quantum circuit of a single-qubit gate is known. Therefore, in this embodiment of this application, based on iterative decomposition of the to-be-processed unitary matrix and decomposition of the qubit uniformly controlled gates, a problem of implementing the circuit that corresponds to the to-be-processed unitary matrix is further converted into a problem of implementing a circuit that corresponds to a qubit diagonal unitary matrix (the diagonal unitary matrix is easier to implement than the unitary matrix).

With reference to formulas (1) to (3), the following specifically describes a process of decomposing a qubit uniformly controlled gate.

Each diagonal element of an arbitrary n-qubit uniformly controlled gate is a diagonal matrix, as shown in the formula (1):

$$V_n = \begin{bmatrix} U_1 & & & \\ & U_2 & & \\ & & \ddots & \\ & & & U_{2^{j-1}} \end{bmatrix} \in \mathbb{C}^{2^j \times 2^j} \tag{1}$$

In the formula, $V_n$ represents the n-qubit uniformly controlled gate, and $U_k$ represents a diagonal matrix, where $k \in [2^{n-1}]$.

An arbitrary diagonal matrix $U_k$ can be decomposed in a way shown in the formula (2):

$$U_k = e^{i\alpha_k} R_z(\beta_k) SH R_z(\gamma_k) HS^\dagger R_z(\delta_k), \alpha_k, \beta_k, \gamma_k, \delta_k \in \mathbb{R}, k \in [2^{n-1}] \tag{2}$$

In the formula, $R_z$ represents a rotation gate, $S$ represents a phase gate, H represents a Hadamard gate, and $S^\dagger$ represents an inverse phase gate.

In this case, the arbitrary n-qubit uniformly controlled gate can be decomposed into a form shown in the formula (3):

$$V_n = \underbrace{\begin{bmatrix} e^{i\alpha_1} & & & \\ & e^{i\alpha_1} & & \\ & & \ddots & \\ & & & e^{i\alpha_{2^{n-1}}} \\ & & & & e^{i\alpha_{2^{n-1}}} \end{bmatrix}}_{A_1} \cdot \underbrace{\begin{bmatrix} R_z(\beta_1) & & \\ & \ddots & \\ & & R_z(\beta_{2^{n-1}}) \end{bmatrix}}_{A_2} \cdot \underbrace{\mathbb{I}_{n-1} \otimes (SH)}_{A_3} \cdot$$

$$\underbrace{\begin{bmatrix} R_z(\gamma_1) & & \\ & \ddots & \\ & & R_z(\gamma_{2^{n-1}}) \end{bmatrix}}_{A_4} \cdot \underbrace{\mathbb{I}_{n-1} \otimes (HS^\dagger)}_{A_5} \cdot \underbrace{\begin{bmatrix} R_z(\delta_1) & & \\ & \ddots & \\ & & R_z(\delta_{2^{n-1}}) \end{bmatrix}}_{A_6} \tag{3}$$

In the formula, $\mathbb{I}_{n-1}$ represents an identity operator of n-1 qubits ( $\mathbb{I}_{n-1}$ represents a (2n - 1) × (2n - 1)-dimensional identity matrix, and a (2n - 1) × (2n - 1)-dimensional operator can operate on n-1 qubits for implementation). $A_1$, $A_2$, $A_4$, and $A_6$ are all n-qubit diagonal unitary matrices. The Hadamard gates $H$, the phase gate S, and the inverse phase gate $S^\dagger$ are all single-qubit gates. $A_1$ and $A_2$ can be combined into an n-qubit diagonal unitary matrix. Therefore, for the arbitrary n-qubit uniformly controlled gate, an electronic device can obtain three (the second quantity) n-qubit diagonal unitary matrices (that is, $A_1 \cdot A_2$, $A_4$, and $A_6$) and four (the third quantity) single-qubit gates (that is, the Hadamard gate $H$ and the phase gate S in $A_3$, and the Hadamard gate $H$ and the inverse phase gate $S^\dagger$ in $A_5$) through decomposition.

For example, FIG. 6 is a schematic diagram of decomposing a qubit uniformly controlled gate according to an embodiment of this application. An electronic device decomposes an n-qubit uniformly controlled gate $V_t^S$ that is obtained through decomposition of a to-be-processed unitary matrix (a set $S = \{s_1, s_2, \ldots, s_{n-1}\}$ represents numbers of control qubits, and t represents a number of a target qubit), and obtains three n-qubit diagonal unitary matrices, that is, $\Lambda_t^S(1), \Lambda_t^S(2)$, and $\Lambda_t^S(3)$ ( $\Lambda_t^S(1)$ corresponds to $A_6$ in the formula (3), $\Lambda_t^S(2)$ corresponds to $A_4$ in the formula (3), and $\Lambda_t^S(3)$ is a combination of $A_1$ and $A_2$ in the formula (3) (that is, $A_1 \cdot A_2$)), and four single-qubit gates (which are $S^\dagger$, $H$, $H$, and S from left to right in the formula (3), respectively). It can be learned that to implement a circuit U of the n-qubit uniformly controlled gate $V_t^S$ , the electronic device only needs to implement circuits corresponding to the n-qubit diagonal unitary matrices $\Lambda_t^S(1), \Lambda_t^S(2)$, and $\Lambda_t^S(3)$, that is, $R_1$, $R_2$, and $R_3$.

In conclusion, with reference to the decomposing the n-qubit uniformly controlled gate into the n-qubit diagonal unitary matrices in S102, it can be learned that to obtain a target quantum circuit of the n-qubit uniformly controlled gate, and further obtain the quantum circuit that corresponds to the to-be-processed unitary matrix under the constraints of the connected graph, only matching quantum circuits corresponding to the n-qubit diagonal unitary matrices need to be implemented.

S103: Determine, under the constraints of the connected graph, a respective matching quantum circuit corresponding to each qubit diagonal unitary matrix.

In all embodiment of this application, the electronic device needs to implement, under the constraints of the connected graph, circuits corresponding to the qubit diagonal unitary matrices, and denotes the obtained circuits as the matching quantum circuits. The electronic device determines numbers (number(s)/node number(s) here and below can also called serial numbers/node serial number(s)) of the n qubits based on the connected graph, determines qubit pairs based on the numbers, and recursively implements, by using two-qubit gates acting on the qubit pairs, the matching quantum circuits corresponding to the qubit diagonal unitary matrices.

Any two nodes included in a connected graph are connected, that is, any two nodes are connected by an edge. Nodes in a connected graph one-to-one correspond to qubits, that is, nodes in a connected graph represent qubits. Constraints of a connected graph mean that a two-qubit gate in a quantum circuit is allowed to act only on two qubits that are connected by an edge in a connected graph. For example, FIG. 7 is a schematic diagram of a connected graph according to an embodiment of this application. In the connected graph $G = (V, E)$, $V = \{q_1, q_2, \dots, q_n\}$ represents a set of n nodes in the connected graph, and E represents a set of edges in the connected graph. The nodes in the connected graph G represent qubits in a quantum circuit. In this case, under constraints of the connected graph G, a two-qubit gate (for example, a CNOT gate) is allowed to act only on qubit pairs $(q_1, q_2)$, $(q_2, q_3)$, $(q_2, q_4)$, $(q_4, q_5)$, because qubits in each of the qubit pairs $(q_1, q_2)$, $(q_2, q_3)$, $(q_2, q_4)$, $(q_4, q_5)$ are connected by an edge.

Numbers obtained based on a connected graph have the following advantage: A distance between a qubit numbered $k \in [n]$ ($[n]$ represents a set of numbers of n qubits) and a qubit numbered n does not exceed $n - k$. Therefore, a size of a circuit of a two-qubit gate can be restricted when the circuit is implemented under constraints of a path, and a size of a matching quantum circuit is restricted accordingly.

The following describes a process of implementing, under the constraints of the connected graph, the matching quantum circuit corresponding to the qubit diagonal unitary matrix.

FIG. 9 is another schematic flowchart of a quantum circuit optimization method according to an embodiment of this application. In some embodiments, because different n-qubit uniformly controlled gates may have different control qubits and target qubits, n-qubit diagonal unitary matrices obtained through decomposition of different n-qubit uniformly controlled gates may also have different target qubits and control qubits. Diagonal unitary matrices $\Lambda_k^{[n]-\{k\}}$ and $\Lambda_\ell^{[n]-\{\ell\}}$ can be transformed into each other by using a CNOT circuit of a circuit size not exceeding O (n). Therefore, the electronic device may select $\Lambda_n^{[n-1]}$ as a reference diagonal unitary matrix, determine a matching quantum circuit (that is, a reference quantum circuit), and then obtain, through transformation that is performed by using a CNOT gate, a transformation quantum circuit corresponding to a remaining diagonal unitary matrix. In this way, a matching quantum circuit corresponding to an arbitrary n-qubit diagonal unitary matrix can be obtained. To be specific, a specific implementation process of S103 may include the following S1031 to S1035:

S1031: Determine, under the constraints of the connected graph, numbers respectively corresponding to the n qubits.

In all embodiments of this application, step S1031 may be implemented by using the following solution 2: extracting a target tree from the connected graph; numbering each node in the target tree, to obtain a node number corresponding to each node; and determining the node number corresponding to each node as a number of a qubit corresponding to each node. The target tree is an arbitrary spanning tree in the connected graph, and each qubit corresponds to a node in the target tree.

For example, the electronic device extracts a spanning tree from the connected graph $G = (V, E)$ arbitrarily and numbers the n qubits by using the spanning tree. In the spanning tree, nodes are all of the nodes in the connected graph $G = (V, E)$, and edges are some of the edges in the connected graph $G = (V, E)$, that is, $V(G') = V(G)$ and $E(G') \subseteq E(G)$. $G'$ represents the spanning tree, and satisfies that all the edges in the edge set $E(G')$ connect all the nodes without forming a loop.

In more detail, the numbering each node in the target tree, to obtain a node number corresponding to each node in the solution 2 may be implemented by performing the following steps: generating an initial number for each node in the target tree; and searching numbered nodes for a target node (or called a first node) that matches a search criterion in a case that the node numbered n-k+2 does not have a child node or does not have a child node that is numbered the initial number, and determining a node number of a leftmost child node of the target node as n-k+1; and/or determining a node number of a leftmost child node of a child node that is numbered the initial number as n-k+1, in a case that the node numbered n-k+2 has the child node and the child node is numbered the initial number.

The search criterion is a node that is numbered a largest number and has a child node numbered the initial number, $3 \leq k \leq n$, the node numbered n is a root node of the target tree (that is, an $n^{th}$ node is the root node of the target tree), and the node numbered n-1 is a leftmost node of the root node (that is, an $(n-1)^{th}$ node is the leftmost node of the root node). In other words, the electronic device first accesses a root node of a spanning tree and numbers the root node n, and then accesses a leftmost child node of the root node and numbers the node n-1. The electronic device then continues to access nodes downward. When an accessed node number is $n - k + 2$ ($3 \leq k \leq n$), if the node n-k+2 does not have a leaf node or does not have a leaf node numbered 0 (0 is an initial number), the electronic device finds, in a node set $\{n - k + 2, n - k + 3, ..., n\}$ (that is, numbered nodes), a node that is numbered a largest number and has a child node numbered 0, accesses a leftmost node that is of the node and is numbered 0, and numbers the leftmost node $n - k + 1$. If the node $n - k + 2$ has a child node numbered 0, the electronic device accesses a leftmost child node that is of the child node and is numbered 0, and numbers the leftmost child node $n - k + 1$.

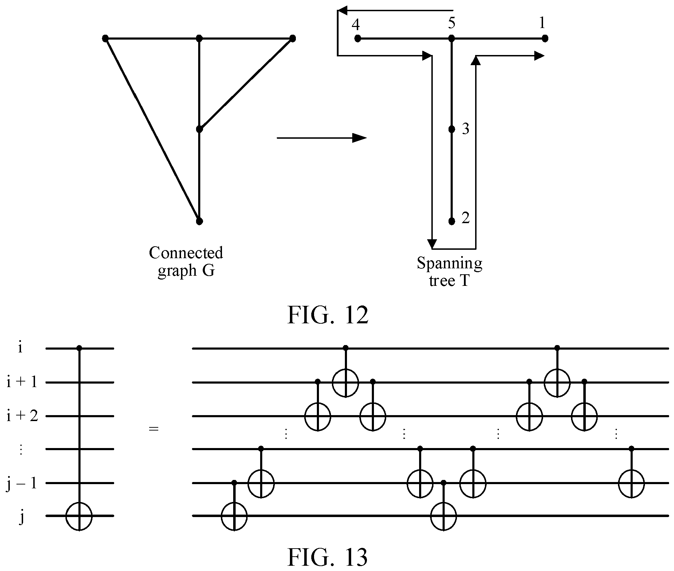

For example, FIG. 12 is a schematic diagram of numbering qubits according to an embodiment of this application. For a connected graph G, an electronic device first extracts a spanning tree T and numbers all nodes in the spanning tree T 0 (that is, an initial number). First, the electronic device accesses a root node of T and determines a node number of the root node as 5. Then, the electronic device accesses a leftmost child node that is of the node 5 and is numbered 0, and determines a node number of the leftmost child node as 4. Because the node 4 does not have a child node, the electronic device returns to the node 5, accesses a leftmost child node of remaining child nodes that are numbered 0, and determines a node number of the leftmost child node as 3. Because the node 3 has a child node numbered 0, the electronic device determines a node number of the child node as 2. Because the node 2 does not have a child node, the electronic device returns to the node 3. Because the node 3 does not have a remaining child node numbered 0, the electronic device continues to return to the node 5, then accesses a leftmost child node of remaining child nodes that are of the node 5 and are numbered 0, and determines a node number of the leftmost child node as 1. In this way, numbers of five qubits are obtained. The numbers indicate an order in which the five qubits are accessed.

In the foregoing numbering manner, the n qubits may be denoted as [$n$]. The numbering manner has the following advantage: A distance between a node numbered $k \in [n]$ and a node numbered $n$ does not exceed $n - k$, and a subgraph generated by $\{k, k + 1, k + 2, ..., n\}$ is a connected graph.

S1032: Extract a reference diagonal unitary matrix from the qubit diagonal unitary matrix based on the numbers of the n qubits. A target qubit of the reference diagonal unitary matrix is a qubit numbered n, and control qubits are qubits numbered 1, 2, ..., and n-1.

S1033: Determine, based on the numbers of the n qubits, a reference quantum circuit corresponding to the reference diagonal unitary matrix.

Before the reference quantum circuit is determined for the reference diagonal unitary matrix (that is, $\Lambda_n^{[n-1]}$), a definition of transformation of the reference diagonal unitary matrix $\Lambda_n^{[n-1]}$ in a standard basis is first described:

$$\Lambda_n^{[n-1]}|x\rangle \to e^{i\theta(x)}|x\rangle, \qquad \theta(x) \in \mathbb{R}, \theta(0^n) = 1, \forall x = x_1 x_2 \cdots x_n \in \{0,1\}^n$$

In the definition, $|x\rangle$ represents the standard basis, and $\mathbb{R}$ represents a set of real numbers. For the set of real numbers, the following may be defined: $\{\alpha_s: s \in \{0,1\}^n - \{0^n\}\}$:

$$\sum_{s \in \{0,1\}^n - \{0^n\}} \langle s, x \rangle = \theta(x), \ \forall x \in \{0,1\}^n \qquad (1)$$

For convenience, $\alpha_0 n = 0$ may be defined. Next, implementation of the reference quantum circuit corresponding to $\Lambda_n^{[n-1]}$ is described.

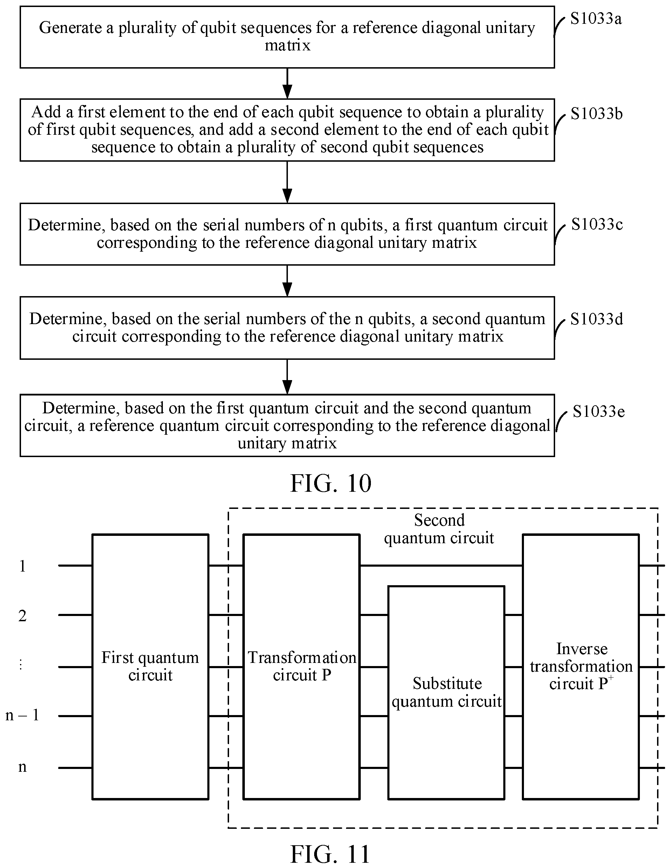

FIG. 10 is still another schematic flowchart of a quantum circuit optimization method according to an embodiment of this application. In some embodiments, a specific implementation process of S1033 may include the following S1033a to S1033e:

S1033a: Generate a plurality of qubit sequences for the reference diagonal unitary matrix.

For example, when the reference diagonal unitary matrix is $\Lambda_n^{[n-1]}$, the electronic device constructs $2^{n-1}$ qubit sequences of length $n - 1$: $c_1, c_2, c_3, \ldots, c_{2n-1}$.

In all embodiments of this application, the generating a plurality of qubit sequences for the reference diagonal unitary matrix may be implemented through the following processing: determining a to-be-flipped qubit of a $j^{th}$ qubit sequence, and flipping an element on the to-be-flipped qubit, to obtain a $(j+1)^{th}$ qubit sequence; and determining $2^{n-1}$ qubit sequences as the plurality of qubit sequences of the reference diagonal unitary matrix in a case that a value of j reaches $2^{n-1}$.

$2 \leq j \leq 2^{n-1}$, and the first qubit sequence is formed by arranging n-1 second elements. For example, when the second element is 0, the first qubit sequence is formed by arranging n-1 0s. The to-be-flipped qubit is obtained by subtracting a value of the ruler function for j from n.

In other words, the first qubit sequence $c_1 = 0^{n-1}$, and the qubit sequence $c_j$ is obtained by flipping an $(n - \zeta(j - 1))^{th}$ qubit in $c_{j-1}$. It can be learned with reference to properties of the ruler function that $c_{2n-1}$ is obtained by flipping the first qubit in $c_1$, and $\{c_1, c_2, c_3, \ldots, c_{2n-1}\} = \{0,1\}^{n-1}$.

S1033b: Add a first element to the end of each qubit sequence to obtain a plurality of first qubit sequences, and add the second element to the end of each qubit sequence to obtain a plurality of second qubit sequences.

For example, the first element may be 1 and the second element may be 0. In this case, the electronic device expands each qubit sequence of length $n - 1$ to two qubit sequences of length $n$. For example, when the plurality of qubit sequences are 00, 01, 10, and 11, respectively, the plurality of first qubit sequences may be 001, 011, 101, and 111, and the plurality of second qubit sequences may be 000, 010, 100, and 110.

S1033c: Determine, based on the numbers of the n qubits, a first quantum circuit corresponding to the reference diagonal unitary matrix, the first quantum circuit being configured to load phases corresponding to the plurality of first qubit sequences into the standard basis.

For example, when the first element is 1, the phases corresponding to the first qubit sequences are loaded into a quantum circuit corresponding to the standard basis, to obtain the first quantum circuit corresponding to the reference diagonal unitary matrix. With reference to the transformation of the reference diagonal unitary matrix $\Lambda_n^{[n-1]}$ in the standard basis and the set of real numbers defined above, in step S1033c, the electronic device implements a quantum circuit corresponding to a result of transformation $|x\rangle \xrightarrow{Stage\,1} e^{i\left(\sum_{c\in\{0,1\}^{n-1}}\langle c1,x\rangle\alpha_{c1}\right)}|x\rangle$, $\forall x = x_1 \cdots x_n \in \{0,1\}^n$, where c is a collective term for a plurality of qubit sequences, c1 is a collective term for first qubit sequences that are obtained by adding 1 to the end of each qubit sequence, and $\alpha_{c1}$ represents a set of real numbers that includes the first qubit sequences.

In more detail, S1033c may be implemented through the following processing: determining a matching CNOT gate of a $j^{th}$ first qubit sequence based on the numbers of the n qubits; constructing, based on a $(j+1)^{th}$ first qubit sequence, a matching R quantum gate that is applied after the matching CNOT gate of the $j^{th}$ first qubit sequence; connecting the $2^{n-1} - 1$ matching CNOT gates and the $2^{n-1} - 1$ matching R quantum gates alternately in a case that j reaches $2^{n-1} - 1$, to obtain a candidate sub-circuit; determining a supplementary R quantum gate and a supplementary CNOT gate, and connecting the supplementary R quantum gate and the supplementary CNOT gate, to obtain a supplementary sub-circuit; and determining the first quantum circuit based on the candidate sub-circuit and the supplementary sub-circuit. j is a positive integer that increases sequentially, and $1 \leq j \leq 2^{n-1} - 1$. $2^{n-1}$ is a quantity of the first qubit sequences.

A target qubit of a matching CNOT gate is the qubit numbered n, and a control qubit is a qubit numbered $n - \zeta(j)$. To be specific, the electronic device applies a CNOT gate to the qubit numbered n and the qubit numbered $n - \zeta(j)$ ($\zeta(j)$ is calculated based on the definition of the ruler function). The CNOT gate is configured to process a first qubit sequence. In other words, a number corresponding to a control qubit of the matching CNOT gate of the $j^{th}$ first qubit sequence is calculated based on n and j, and a target qubit is the qubit numbered n.

The supplementary R quantum gate is determined based on the first qubit sequence, a control qubit of the supplementary CNOT gate is a qubit numbered 1, and a target qubit of the supplementary CNOT gate is the qubit numbered n.

For example, a formula (2) is a formula representation of the first quantum circuit:

$$\left[R(\alpha_{c_1 1})CNOT_n^1\right]\prod_{j=1}^{2^{n-1}-1}\left[R\left(\alpha_{c_{j+1}1}\right)CNOT_n^{n-\zeta(j)}\right] \tag{2}$$

In the formula, $\alpha_{c1}$ represents the set of real numbers that includes the first qubit sequences, $CNOT_n^{n-\zeta(j)}$ represents a matching CNOT gate, R ($\alpha_{cj+11}$) represents a matching R quantum gate, $CNOT_n^1$ represents the supplementary CNOT gate, and $R(\alpha_{c11})$ represents the supplementary R quantum gate.

The formula (2) may be implemented by following the process below:

$$|x\rangle = |x_1 x_2 \cdots x_{n-1}\rangle |x_n\rangle = |x_1 \cdots x_{n-1}\rangle |\langle x, c_1 1\rangle\rangle$$

$$\xrightarrow{CNOT_n^{n-\zeta(1)}} |x_1 \cdots x_{n-1}\rangle |\langle x, c_2 1\rangle\rangle$$

$$\xrightarrow{R(\alpha_{c_2 1})} e^{i\alpha_{c_2 1}\langle c_2 1, x\rangle} |x_1 \cdots x_{n-1}\rangle |\langle x, c_2 1\rangle\rangle$$

$$\xrightarrow{CNOT_n^{n-\zeta(2)}} e^{i\alpha_{c_2 1}\langle c_2 1, x\rangle} |x_1 \cdots x_{n-1}\rangle |\langle x, c_3 1\rangle\rangle$$

$$\xrightarrow{R(\alpha_{c_3 1})} e^{i(\alpha_{c_2 1}\langle c_2 1, x\rangle + \alpha_{c_3 1}\langle c_3 1, x\rangle)} |x_1 \cdots x_{n-1}\rangle |\langle x, c_3 1\rangle\rangle$$

$$\vdots$$

$$\xrightarrow{CNOT_n^{n-\zeta(k)}} e^{i\left(\sum_{j=2}^{k} \alpha_{c_j 1}\langle c_j 1, x\rangle\right)} |x_1 \cdots x_{n-1}\rangle |\langle x, c_{k+1} 1\rangle\rangle$$

$$\xrightarrow{R(\alpha_{c_{k+1} 1})} e^{i\left(\sum_{j=2}^{k+1} \alpha_{c_j 1}\langle c_j 1, x\rangle\right)} |x_1 \cdots x_{n-1}\rangle |\langle x, c_{k+1} 1\rangle\rangle$$

$$\vdots$$

$$\xrightarrow{CNOT_n^{n-\zeta(2^{n-1}-1)}} e^{i\left(\sum_{j=2}^{2^{n-1}-1} \alpha_{c_j 1}\langle c_j 1, x\rangle\right)} |x_1 \cdots x_{n-1}\rangle |\langle x, c_{2^{n-1}} 1\rangle\rangle$$

$$\xrightarrow{R(\alpha_{c_{2^{n-1}} 1})} e^{i\left(\sum_{j=2}^{2^{n-1}} \alpha_{c_j 1}\langle c_j 1, x\rangle\right)} |x_1 \cdots x_{n-1}\rangle |\langle x, c_{2^{n-1}} 1\rangle\rangle$$

$$\xrightarrow{CNOT_n^1} e^{i\left(\sum_{j=2}^{2^{n-1}} \alpha_{c_j 1}\langle c_j 1, x\rangle\right)} |x_1 \cdots x_{n-1}\rangle |\langle x, c_1 1\rangle\rangle$$

$$\xrightarrow{R(\alpha_{c_1 1})} e^{i\left(\sum_{j=1}^{2^{n-1}} \alpha_{c_j 1}\langle c_j 1, x\rangle\right)} |x_1 \cdots x_{n-1}\rangle |\langle x, c_1 1\rangle\rangle$$

$$= e^{i\left(\sum_{c \in \{0,1\}^{n-1}} \langle c1, x\rangle \alpha_{c1}\right)} |x\rangle .$$

S1033d: Determine, based on the numbers of the n qubits, a second quantum circuit corresponding to the reference diagonal unitary matrix, the second quantum circuit being configured to load phases corresponding to the plurality of second qubit sequences into the standard basis.

In all embodiments of this application, step S1033d may be implemented by using the following solution 1: determining a to-be-implemented diagonal unitary matrix corresponding to the reference diagonal unitary matrix, the to-be-implemented diagonal unitary matrix corresponding to n-1 qubits; decomposing the to-be-implemented diagonal unitary matrix by using a transformation circuit, to obtain a substitute diagonal unitary matrix, the transformation circuit being configured to substitute quantum states in a first qubit set corresponding to the to-be-implemented diagonal unitary matrix for quantum states in a second qubit set; determining, based on the numbers of the n qubits, a substitute quantum circuit corresponding to the substitute diagonal unitary matrix; and determining a connection result of the transformation circuit, the substitute quantum circuit, and an inverse transformation circuit corresponding to the transformation circuit as the second quantum circuit, the inverse transformation circuit being configured to substitute the quantum states in the second qubit set for the quantum states in the first qubit set (for example, the inverse transformation circuit transforms the qubits into initial positions, that is, original quantum states).

The following describes the solution 1 by using an example. When the second element is 0, the phases corresponding to the second qubit sequences are loaded into the quantum circuit corresponding to the standard basis, to obtain the second quantum circuit. With reference to the transformation of the reference diagonal unitary matrix $\Lambda_n^{[n-1]}$ in the standard basis and the set of real numbers defined above, the electronic device implements a quantum circuit corresponding to a result of

$$|x\rangle \xrightarrow{Stage\ 2} e^{i\left(\sum_{c\in\{0,1\}^{n-1}}\langle c0,x\rangle\alpha_{c0}\right)}|x\rangle = e^{i\left(\sum_{c\in\{0,1\}^{n-1}}\langle c,x_1\cdots x_{n-1}\rangle\alpha_c\right)}|x\rangle, \forall x \in \{0,1\}^n$$

, and determines the quantum circuit as the second quantum circuit, where $c0$ represents second qubit sequences that are obtained by adding 0 to the end of each qubit sequence, and $\alpha_{c0}$ represents a set of real numbers that includes the second qubit sequences.

Implementing $|x\rangle \xrightarrow{Stage\ 2} e^{i\left(\sum_{c\in\{0,1\}^{n-1}}\langle c0,x\rangle\alpha_{c0}\right)}|x\rangle = e^{i\left(\sum_{c\in\{0,1\}^{n-1}}\langle c,x_1\cdots x_{n-1}\rangle\alpha_c\right)}|x\rangle$ is actually implementing an (n-1)-qubit diagonal unitary matrix that corresponds to a qubit set [$n$ - 1] (a to-be-implemented diagonal unitary matrix $\Lambda_{n-1}^{[n-2]}$ ), that is:

$$\Lambda_{n-1}^{[n-2]}|x_1 x_2 \cdots x_{n-1}\rangle = e^{i\left(\sum_{c\in\{0,1\}^{n-1}}\langle c,x_1\cdots x_{n-1}\rangle\alpha_c\right)}|x_1 x_2 \cdots x_{n-1}\rangle, \forall x_1, x_2, \ldots, x_{n-1} \in \{0,1\}$$

However, a graph generated based on the qubit set [$n$ - 1] (that is, a first qubit set) is not necessarily a connected graph, but a graph generated based on a qubit set [$n$] - {1} (that is, a second qubit set) is a connected graph. Therefore, for a purpose of implementing $\Lambda_{n-1}^{[n-2]}$ , a transformation circuit that can substitute quantum states in the qubit set [$n$ - 1] corresponding to the to-be-implemented diagonal unitary matrix for quantum states in the qubit set [$n$] - {1} may be first determined in this embodiment of this application. To be specific, the transformation circuit is configured to substitute the quantum states in the first qubit set corresponding to the to-be-implemented diagonal unitary matrix for the quantum states in the second qubit set. For example, the qubit set [$n$ - 1] is a set of qubits numbered 1, 2, 3, ..., and n-1. Respective quantum states of the qubits are represented by $x_1\rangle$, $x_2\rangle$, ..., and $x_{n-1}\rangle$. In this case, a quantum state of a qubit numbered n is $x_n\rangle$. The qubit set [$n$] - {1} is a set of qubits numbered 2, 3, ..., and n. In this case, a process of substitute the quantum states in the qubit set [$n$ - 1] for the quantum states in the qubit set [$n$] - {1} is as follows: The quantum states of the qubits numbered 2, 3, ..., and n are replaced with $x_1\rangle$, $x_2\rangle$, ..., and $x_{n-1}\rangle$, respectively. In this case, the quantum state of the qubit numbered n is $x_{n-1}\rangle$. Then, the to-be-implemented diagonal unitary matrix is decomposed in the following manner: Based on a unitary matrix corresponding to the transformation circuit and a unitary matrix corresponding to an inverse transformation circuit, the to-be-implemented diagonal unitary matrix is decomposed, to obtain $\Lambda_n^{[n-1]-\{1\}}$ that corresponds to the qubit set [$n$] - {1} (a substitute diagonal unitary matrix). Decomposition principles are as follows: $\Lambda_{n-1}^{[n-2]}$ and $\Lambda_n^{[n-1]-\{1\}}$ satisfy $Y = PXP^{-1}$ ($Y$ represents the to-be-implemented diagonal unitary matrix, $P$ represents the unitary matrix corresponding to the transformation circuit, $P^{-1}$ represents the unitary matrix corresponding to the inverse transformation circuit, and $X$ represents the substitute diagonal unitary matrix). Therefore, after the transformation circuit is determined, the unitary matrix corresponding to the transformation circuit and the unitary matrix corresponding to the inverse transformation circuit are both known, and accordingly $\Lambda_n^{[n-1]-\{1\}}$ is obtained through matrix transformation (that is, by left-multiplying $Y$ by $P^{-1}$, right-multiplying $Y$ by $P$, and decomposing $Y$). Then, a quantum circuit corresponding to $\Lambda_n^{[n-1]-\{1\}}$ (a substitute quantum circuit) is determined in the following manner: Because $\Lambda_n^{[n-1]-\{1\}}$ is constrained by the connected graph, the substitute diagonal unitary matrix $\Lambda_n^{[n-1]-\{1\}}$ may be decomposed based on the numbers of the n qubits. Then, quantum circuits corresponding to quantum gates that are finally obtained through decomposition are connected, to obtain the substitute quantum circuit. For example, $\Lambda_n^{[n-1]-\{1\}}$ is used as a new reference diagonal unitary matrix, and steps S1033a to S1033e are performed to obtain the substitute quantum circuit corresponding to $\Lambda_n^{[n-1]-\{1\}}$ . To be specific, step S1033a is performed to construct qubit sequences for $\Lambda_n^{[n-1]-\{1\}}$ ; step S1033b is performed, to obtain first qubit sequences for $\Lambda_n^{[n-1]-\{1\}}$ by adding 0 to the end of each qubit sequence, and to obtain second qubit sequences for $\Lambda_n^{[n-1]-\{1\}}$ by adding 1 to the end of each qubit sequence; then a first quantum circuit corresponding to $\Lambda_n^{[n-1]-\{1\}}$ is determined in a manner similar to a process in S1033c; a second quantum circuit corresponding to $\Lambda_n^{[n-1]-\{1\}}$ is determined by using a method in step S1033d; and step S1033e is performed to determine the substitute quantum circuit corresponding to $\Lambda_n^{[n-1]-\{1\}}$. After the quantum circuit corresponding to $\Lambda_n^{[n-1]-\{1\}}$ (the substitute quantum circuit) is determined, the transformation circuit and the inverse transformation circuit that corresponds to the transformation circuit are connected based on the substitute quantum circuit, to obtain a second quantum circuit.

S1033e: Determine, based on the first quantum circuit and the second quantum circuit, the reference quantum circuit corresponding to the reference diagonal unitary matrix.

The electronic device first applies the first quantum circuit to the n qubits and then applies the second quantum circuit also to the n qubits. The obtained overall circuit is the reference quantum circuit. In other words, the electronic device connects the first quantum circuit and the second quantum circuit, and obtains the reference quantum circuit.

For example, FIG. 11 is a schematic diagram of a reference quantum circuit according to an embodiment of this application. A first quantum circuit and a second quantum circuit are applied to qubits numbered 1, 2, ..., n-1, and n. The second quantum circuit includes a transformation circuit P, a substitute quantum circuit, and an inverse transformation circuit P†.

S1034: Transform the reference quantum circuit by using a CNOT gate, to obtain a transformation quantum circuit corresponding to a remaining diagonal unitary matrix.

The remaining diagonal unitary matrix is a diagonal unitary matrix that is obtained after the reference diagonal unitary matrix is removed from the qubit diagonal unitary matrix.

S1035: Determine the reference quantum circuit corresponding to the reference diagonal unitary matrix and the transformation quantum circuit corresponding to the remaining diagonal unitary matrix as the matching quantum circuit corresponding to the qubit diagonal unitary matrix.

S104: Integrate the second quantity of matching quantum circuits and the third quantity of single-qubit gates, to obtain a respective target quantum circuit for each qubit uniformly controlled gate.

The single-qubit gates are known quantum circuits. After the electronic device obtains, by performing step S103, the matching quantum circuits that are constrained by the connected graph, step S104 may be implemented in the following manner: The matching quantum circuits and the single-qubit gates are connected in an order, to obtain the target quantum circuit of each qubit uniformly controlled gate. The order is a decomposition order of the qubit diagonal unitary matrices and the single-qubit gates that are obtained through decomposition of the qubit uniformly controlled gate, for example, an order in FIG. 6. Finally, the electronic device obtains a plurality of target quantum circuits one-to-one correspond to the plurality of qubit uniformly controlled gates.

For example, as shown in FIG. 6, $S^†$, $H$, $H$, and $S$ are known quantum circuits. After matching quantum circuits respectively corresponding to $R_1$, $R_2$, and $R_3$ are obtained by performing step S103, the known quantum circuits (that is, the single-qubit gates $S^†$, $H$, $H$, and $S$) and the matching quantum circuits (that is, the matching quantum circuits respectively corresponding to $R_1$, $R_2$, and $R_3$) are connected in an order of $R_1$, $S^†$, $H$, $R_2$, $H$, $S$, and $R_3$ (that is, a decomposition order of the qubit diagonal unitary matrices and the single-qubit gates that are obtained through decomposition of the qubit uniformly controlled gate), to obtain a target quantum circuit of the n-qubit uniformly controlled gate $V_t^S$.

S105: Connect the first quantity of target quantum circuits, to obtain an optimized quantum circuit.

Herein, after obtaining the first quantity of target quantum circuits by performing step S104, the electronic device connects the first quantity of target quantum circuits in an iterative decomposition order of the qubit uniformly controlled gates, to obtain the optimized quantum circuit (that is, an optimized quantum circuit corresponding to the to-be-optimized quantum circuit). The iterative decomposition order is an order of the qubit uniformly controlled gates that are obtained through iterative decomposition of the to-be-processed unitary matrix. It can be learned from the foregoing content that computation time required by the optimized quantum circuit is less than computation time required by the to-be-optimized quantum circuit.

In conclusion, the all embodiments of this application are implemented in a scenario in which the to-be-optimized quantum circuit is optimized under the constraints of the connected graph, to obtain, by optimizing the to-be-optimized quantum circuit, an optimized quantum circuit that can implement the same functions as the to-be-optimized quantum circuit but has fewer quantum gates (that is, less required computation time). Each quantum circuit has a corresponding unitary matrix. In all embodiments of this application, the electronic device first transforms the to-be-processed quantum circuit into a unitary matrix. The obtained unitary matrix is the to-be-processed unitary matrix. The to-be-optimized quantum circuit is of a complex structure. Therefore, without changing functions and while being constrained by the connected graph, it is difficult to optimize the to-be-optimized quantum circuit. However, a process of implementing a quantum circuit corresponding to a unitary matrix is simple. Therefore, in all embodiments of this application, the electronic device first iteratively decomposes the to-be-processed unitary matrix that is obtained through transformation of the to-be-optimized quantum circuit, and then decomposes the qubit uniformly controlled gates that are obtained through decomposition, to obtain the qubit diagonal unitary matrices and the single-qubit gates, so as to recursively convert a problem of optimizing a quantum circuit into a problem of implementing a quantum circuit corresponding to a qubit diagonal unitary matrix. The electronic device then determines the matching quantum circuits for the qubit diagonal unitary matrices under the constraints of the connected graph, and finally integrates the matching quantum circuits and the single-qubit gates, to obtain the optimized quantum circuit. In this way, an optimal quantum circuit under the constraints of the connected graph is obtained, that is, an optimized quantum circuit that is faster to compute, improving optimization of the quantum circuit. In addition, when the obtained optimized quantum circuit is applied to a quantum computing device, a computing speed of the quantum computing device is increased, improving computing efficiency of the quantum computing device.

In conclusion, the following describes optimization effects of the quantum circuit optimization method provided in all embodiments of this application.

First, circuit implementation of a CNOT gate and a SWAP gate under constraints of a path is introduced:

1. Circuit implementation of a CNOT gate $CNOT_j^i$ under constraints of a path: For example, FIG. 13 is a schematic diagram of circuit implementation of a CNOT gate under constraints of a path according to an embodiment of this application. With reference to FIG. 13, it can be learned that under constraints of a path $i - (i + 1) - \cdots - (j - 1) - j$, a $CNOT_j^i$ can be implemented by a CNOT circuit with a depth and a size both being $O(j - i)$.

2. Circuit implementation of a SWAP gate $SWAP_j^i$: Because $SWAP_j^i = CNOT_j^i CNOT_i^j CNOT_j^i$, under constraints of a path $i - (i + 1) - ... - (j - 1) - j$, a $SWAP_j^i$ can be implemented by a CNOT circuit with a depth and a size both being $(j - i)$.

3. Compression of a CNOT circuit under constraints of an arbitrary connected graph: Under constraints of a connected graph, a size of an n-qubit circuit including arbitrary CNOT gates can be compressed to $O(n^2)$.

The following analyzes a size of a circuit that is recursively implemented under constraints of a connected graph G and that corresponds to an n-qubit diagonal unitary matrix $\Lambda_n^{[n-1]}$. It is assumed that $S_{[n]-[k]}$ represents a size of a circuit that corresponds to a diagonal unitary matrix and that acts on a qubit set $[n] - [k]$, where $[n] - [0] \stackrel{\text{def}}{=} [n]$ is defined. When a first quantum circuit is determined, it can be learned based on numbers of qubits in the connected graph that a distance between a control qubit $n - \zeta(j)$ and a target qubit $n$ in a $CNOT_n^{n-\zeta(j)}$ does not exceed $\zeta(j)$, and with reference to implementation of a CNOT gate under constraints of a path, it can be learned that the $CNOT_n^{n-\zeta(j)}$ can be implemented by a circuit of a size $O(\zeta(j))$. In addition, the ruler function has the following property: In a set $\{\zeta(i): \forall i \in [2^{n-1} - 1]\}$, an element $k$ appears for $2^{n-1-k}$ times. Therefore, a size of the first quantum circuit is:

$$O(n) + 1 + \sum_{j=1}^{2^{n-1}-1} [O(\zeta(j)) + 1] = O(n) + \sum_{k=1}^{n-1} O(k)2^{n-1-k} = O(2^n)$$

During construction of a second quantum circuit, a size of the circuit that undergoes two substitutions is O((n

- 0)$^2$) = O($n^2$). Therefore, $S_{[n]-[0]}$ satisfies the following recurrence relation:

$$
\begin{aligned}
S_{[n]-[0]} &= S_{[n]-[1]} + O(n^2) + O(2^n) \\
&= S_{[n]-[2]} + O((n-1)^2) + O(n^2) + O(2^n) + O(2^{n-1}) \\
&\vdots \\
&= S_{[n]-[k]} + \sum_{i=1}^{k-1} O((n-i+1)^2) + \sum_{i=1}^{k-1} O(2^{n-i+1}) \\
&\vdots \\
&= O(2^n)
\end{aligned}
$$

In conclusion, the size of the circuit corresponding to the n-qubit diagonal unitary matrix under the constraints of the connected graph is O($2^n$), and therefore a size of a circuit of an n-qubit uniformly controlled gate is 3 · O($2^n$) + 4 = $O(2^n)$. In addition, because $2^n$ - 1 n-qubit uniformly controlled gates are obtained after an n-qubit unitary matrix is decomposed, it can be learned that under the constraints of the connected graph, the n-qubit unitary matrix can be implemented by a circuit of a size O($2^n$) · ($2^n$ - 1) = O($4^n$). Therefore, according to the quantum circuit optimization method provided in all embodiments of this application, an optimal quantum circuit in a progressive sense can be obtained, that is, an optimized quantum circuit that is faster to compute. In addition, when the optimized quantum circuit is applied to a quantum computing device, a computing speed of the quantum computing device can be increased, improving computing efficiency of the quantum computing device.

Besides, in all embodiments of this application, an arbitrary n-qubit uniformly controlled gate is implemented by a circuit of the size O($2^n$) under constraints of a connected graph, and a quantum state preparation circuit can be decomposed into n qubit uniformly controlled gates whose sizes are 1,2, ⋯ , $n$, respectively. Therefore, in all embodiments of this application, a quantum state preparation circuit of a circuit size O($2^n$) under constraints of a connected graph can be implemented, and as such, the size of the quantum state preparation circuit under the constraints of the connected graph is also optimal.

The following continues to describe an exemplary structure of the quantum circuit optimization apparatus 255 provided in the embodiment of this application when the quantum circuit optimization apparatus 255 is implemented as software modules. In some embodiments, as shown in FIG. 3, the software modules in the quantum circuit optimization apparatus 255 stored in the memory 250 may include:

a matrix decomposition module 2551, configured to: transform a to-be-optimized quantum circuit into a to-be-processed unitary matrix, and decompose the to-be-processed unitary matrix iteratively, to obtain a first quantity of qubit uniformly controlled gates; a controlled gate decomposition module 2552, configured to decompose each qubit uniformly controlled gate into a second quantity of qubit diagonal unitary matrices and a third quantity of single-qubit gates; a circuit implementation module 2553, configured to determine, under constraints of a connected graph, a respective matching quantum circuit for each qubit diagonal unitary matrix; and a connection and integration module 2554, configured to: integrate the second quantity of matching quantum circuits and the third quantity of single-qubit gates, to obtain a respective quantum circuit for the each qubit uniformly controlled gate, and connect the first quantity of quantum circuits, to obtain an optimized quantum circuit.

In all embodiments of this application, the matrix decomposition module 2551 is further configured to: perform the following processing for an i$^{th}$ iteration:

performing matrix decomposition on an initial unitary matrix of the i$^{th}$ iteration, to obtain a decomposition result of the i$^{th}$ iteration, an initial unitary matrix of the first iteration being the to-be-processed unitary matrix, i being a positive integer that increases sequentially, 1≤i≤n, and n being a quantity of qubits; extracting at least one qubit uniformly controlled gate of the i$^{th}$ iteration and generated unitary matrices of the i$^{th}$ iteration from the decomposition result of the i$^{th}$ iteration; and determining the generated unitary matrices of the i$^{th}$ iteration as initial unitary matrices of an (i+1)$^{th}$ iteration; and determine 2^n-1 qubit uniformly controlled gates that are obtained after n iterations are performed, as the first quantity of qubit uniformly controlled gates.

In all embodiments of this application, the circuit implementation module 2553 is further configured to: determine, under the constraints of the connected graph, respective serial numbers of the n qubits; extract a reference diagonal unitary matrix from the qubit diagonal unitary matrix based on the serial numbers of the n qubits, a target qubit of the reference diagonal unitary matrix being a qubit with a serial number n, and control qubits of the reference diagonal unitary matrix being qubits with serial numbers 1, 2, ..., and n-1; determine, based on the serial numbers of the n qubits, a reference quantum circuit for the reference diagonal unitary matrix; transform the reference quantum circuit by using a controlled-NOT (CNOT) gate, to obtain a transformation quantum circuit for a remaining diagonal unitary matrix, the remaining diagonal unitary matrix being a diagonal unitary matrix that is obtained after the reference diagonal unitary matrix is removed from the qubit diagonal unitary matrix; and determine the reference quantum circuit for the reference diagonal unitary matrix and the transformation quantum circuit for the remaining diagonal unitary matrix as the matching quantum circuit for the qubit diagonal unitary matrix.

In all embodiments of this application, the circuit implementation module 2553 is further configured to: generate a plurality of qubit sequences for the reference diagonal unitary matrix; add a first element to the end of each qubit sequence to obtain a plurality of first qubit sequences, and add a second element to the end of each qubit sequence to obtain a plurality of second qubit sequences; determine, based on the serial numbers of the n qubits, a first quantum circuit for the reference diagonal unitary matrix, the first quantum circuit being configured to load phases corresponding to the plurality of first qubit sequences into a standard basis; determine, based on the serial numbers of the n qubits, a second quantum circuit for the reference diagonal unitary matrix, the second quantum circuit being configured to load phases corresponding to the plurality of second qubit sequences into the standard basis; and determine, based on the first quantum circuit and the second quantum circuit, the reference quantum circuit for the reference diagonal unitary matrix.

In all embodiments of this application, the circuit implementation module 2553 is further configured to: determine a matching CNOT gate of a $j^{th}$ first qubit sequence based on the serial numbers of the n qubits, j being a positive integer that increases sequentially, and $1 \leq j \leq 2^{n-1} - 1$; construct, based on a $(j+1)^{th}$ first qubit sequence, a matching R quantum gate that is applied after the matching CNOT gate of the $j^{th}$ first qubit sequence; connect the $2^{n-1} - 1$ matching CNOT gates and the $2^{n-1} - 1$ matching R quantum gates alternately in a case that j reaches $2^{n-1} - 1$, to obtain a candidate sub-circuit; determine a supplementary R quantum gate and a supplementary CNOT gate, and connect the supplementary R quantum gate and the supplementary CNOT gate, to obtain a supplementary sub-circuit; and determine the first quantum circuit based on the candidate sub-circuit and the supplementary sub-circuit.

In all embodiments of this application, the supplementary R quantum gate is determined based on the first qubit sequence, a control qubit of the supplementary CNOT gate is a qubit with the serial number 1, and a target qubit of the supplementary CNOT gate is a qubit with the serial number n; and a serial number of a control qubit of the matching CNOT gate of the $j^{th}$ first qubit sequence is calculated based on n and j, and a target qubit of the matching CNOT gate of the $j^{th}$ first qubit sequence is the qubit with the serial number n.

In all embodiments of this application, the circuit implementation module 2553 is further configured to: determine a to-be-implemented diagonal unitary matrix corresponding to the reference diagonal unitary matrix, the to-be-implemented diagonal unitary matrix corresponding to n-1 qubits; substitute quantum states in a first qubit set corresponding to the to-be-implemented diagonal unitary matrix for quantum states in a second qubit set by using a transformation circuit, and determine, as a substitute diagonal unitary matrix, the to-be-implemented diagonal unitary matrix that undergoes the substitution; determine, based on the serial numbers of the n qubits, a substitute quantum circuit for the substitute diagonal unitary matrix; and determine a connection result of the transformation circuit, the substitute quantum circuit, and an inverse transformation circuit corresponding to the transformation circuit as the second quantum circuit, the inverse transformation circuit being configured to substitute the quantum states in the second qubit set for the quantum states in the first qubit set.

In all embodiments of this application, the circuit implementation module 2553 is further configured to: determine a to-be-flipped qubit of a $j^{th}$ qubit sequence, and flip an element on the to-be-flipped qubit, to obtain a $(j+1)^{th}$ qubit sequence, $2 \leq j \leq 2^{n-1}$, and the first qubit sequence being obtained by arranging n-1 second elements; and determine $2^{n-1}$ qubit sequences as the plurality of qubit sequences for the reference diagonal unitary matrix in a case that a value of j reaches $2^{n-1}$.

In all embodiments of this application, the circuit implementation module 2553 is further configured to: extract a target tree from the connected graph, the target tree being an arbitrary spanning tree in the connected graph, and each qubit corresponding to a respective node in the target tree; number each node in the target tree, to obtain a serial number of the each node; and determine the serial number of the each node as a serial number of a respective qubit corresponding to the each node.

In all embodiments of this application, the circuit implementation module 2553 is further configured to: generate an initial serial number for each node in the target tree; and in a case that the node with the serial number n-k+2 does not have a child node or does not have a child node with the initial serial number, search numbered nodes for a first node that matches a search criterion, and determine a serial number of a leftmost child node of the first node as n-k+1, the search criterion being a node with a largest serial number and has a child node with the initial serial number, $3 \leq k \leq n$, the node with the serial number n being a root node of the target tree, and the node with the serial number n-1 being a leftmost node of the root node; and/or in a case that the node with the serial number n-k+2 has a child node with the initial serial number, determine a serial number of a leftmost child node of the child node with the initial serial number as n-k+1.

An embodiment of this application provides a computer program product or a computer program. The computer program product or the computer program includes computer instructions. The computer instructions are stored in a computer-readable storage medium. A processor in an electronic device reads the computer instructions from the computer-readable storage medium. The processor executes the computer instructions, so that the electronic device performs the quantum circuit optimization method in the embodiment of this application.

An embodiment of this application provides a computer-readable storage medium storing executable instructions. When the executable instructions are executed by a processor, the processor is caused to perform the quantum circuit optimization method provided in the embodiment of this application, for example, the quantum circuit optimization method shown in FIG. 4.

In all embodiments of this application, the computer-readable storage medium may be a memory such as a FRAM, a ROM, a PROM, an EPROM, an EEPROM, a flash memory, a magnetic surface memory, a compact disc, or a CD-ROM, or may be a device including one or any combination of the foregoing memories.

In all embodiments of this application, the executable instructions may be in a form of a program, software, a software module, a script, or code, and may be written in any form of programming language (including a compiled language or an interpreted language, or a declarative language or a procedural language). In addition, the executable instructions may be deployed in any form, including being deployed as a standalone program or as a module, a component, a subroutine, or another unit suitable for use in a computing environment.

For example, the executable instructions may be deployed to be executed on an electronic device, or on a plurality of electronic devices that are located in a place, or on a plurality of electronic devices that are distributed across a plurality of places and are connected to each other via a communication network.

In conclusion, in the all embodiments of this application, the electronic device first iteratively decomposes the to-be-processed unitary matrix that is obtained through transformation of the to-be-optimized quantum circuit, and then decomposes the qubit uniformly controlled gates that are obtained through decomposition, to obtain the qubit diagonal unitary matrices and the single-qubit gates, so as to recursively convert a problem of optimizing a quantum circuit into a problem of implementing a quantum circuit corresponding to a qubit diagonal unitary matrix. The electronic device then determines the matching quantum circuits for the qubit diagonal unitary matrices under the constraints of the connected graph, and finally integrates the matching quantum circuits and the single-qubit gates, to obtain the optimized quantum circuit. In this way, an optimal quantum circuit under the constraints of the connected graph is obtained, that is, an optimized quantum circuit that is faster to compute, improving optimization of the quantum circuit. In addition, when the optimized quantum circuit is applied to a quantum computing device, a computing speed of the quantum computing device can be increased, that is, computing efficiency of the quantum computing device is improved. Therefore, a quantum state preparation circuit of a circuit size $O(2^n)$ under the constraints of the connected graph can be implemented, and as such, the size of the quantum state preparation circuit under the constraints of the connected graph is also optimal.

The foregoing descriptions are merely embodiments of this application and are not intended to limit the protection scope of this application. Any modification, equivalent replacement, improvement, and the like made without departing from the spirit and scope of this application shall fall within the protection scope of this application.

**Claims**

1. A quantum circuit optimization method, executable by an electronic device, the method comprising:

   transforming a to-be-optimized quantum circuit into a to-be-processed unitary matrix, and decomposing the to-be-processed unitary matrix iteratively, to obtain a first quantity of qubit uniformly controlled gates;
   decomposing each qubit uniformly controlled gate into a second quantity of qubit diagonal unitary matrices and a third quantity of single-qubit gates;
   determining, under constraints of a connected graph, a respective matching quantum circuit for each qubit diagonal unitary matrix;
   integrating the second quantity of matching quantum circuits and the third quantity of single-qubit gates, to obtain a respective quantum circuit for the each qubit uniformly controlled gate; and
   connecting the first quantity of quantum circuits, to obtain an optimized quantum circuit.

2. The method according to claim 1, wherein the decomposing the to-be-processed unitary matrix iteratively, to obtain a first quantity of qubit uniformly controlled gates comprises:
   letting i be a positive integer that increases sequentially, with $1 \leq i \leq n$ and n being a quantity of qubits, and performing the following processing iteratively based on i:

   performing matrix decomposition on an initial unitary matrix of an $i^{th}$ iteration, to obtain a decomposition result of the $i^{th}$ iteration, an initial unitary matrix of the first iteration being the to-be-processed unitary matrix;

extracting at least one qubit uniformly controlled gate of the $i^{th}$ iteration and generated unitary matrices of the $i^{th}$ iteration from the decomposition result of the $i^{th}$ iteration; and

determining the generated unitary matrices of the $i^{th}$ iteration as initial unitary matrices of an $(i+1)^{th}$ iteration; and determining $2^n - 1$ qubit uniformly controlled gates that are obtained after n iterations are performed, as the first quantity of qubit uniformly controlled gates.

3. The method according to claim 1 or 2, wherein

the qubit diagonal unitary matrix corresponds to n qubits; and

the determining, under constraints of a connected graph, a respective matching quantum circuit for each qubit diagonal unitary matrix comprises:

determining, under the constraints of the connected graph, respective serial numbers of the n qubits;

extracting a reference diagonal unitary matrix from the qubit diagonal unitary matrix based on the serial numbers of the n qubits, a target qubit of the reference diagonal unitary matrix being a qubit with a serial number n, and control qubits of the reference diagonal unitary matrix being qubits with serial numbers 1, 2, ..., and n-1;

determining, based on the serial numbers of the n qubits, a reference quantum circuit for the reference diagonal unitary matrix;

transforming the reference quantum circuit by using a controlled-NOT (CNOT) gate, to obtain a transformation quantum circuit for a remaining diagonal unitary matrix, the remaining diagonal unitary matrix being a diagonal unitary matrix that is obtained after the reference diagonal unitary matrix is removed from the qubit diagonal unitary matrix; and

determining the reference quantum circuit for the reference diagonal unitary matrix and the transformation quantum circuit for the remaining diagonal unitary matrix as the matching quantum circuit for the qubit diagonal unitary matrix.

4. The method according to claim 3, wherein the determining, based on the serial numbers of the n qubits, a reference quantum circuit for the reference diagonal unitary matrix comprises:

generating a plurality of qubit sequences for the reference diagonal unitary matrix;

adding a first element to the end of each qubit sequence to obtain a plurality of first qubit sequences, and adding a second element to the end of each qubit sequence to obtain a plurality of second qubit sequences;

determining, based on the serial numbers of the n qubits, a first quantum circuit for the reference diagonal unitary matrix, the first quantum circuit being configured to load phases corresponding to the plurality of first qubit sequences into a standard basis;

determining, based on the serial numbers of the n qubits, a second quantum circuit for the reference diagonal unitary matrix, the second quantum circuit being configured to load phases corresponding to the plurality of second qubit sequences into the standard basis; and

determining, based on the first quantum circuit and the second quantum circuit, the reference quantum circuit for the reference diagonal unitary matrix.

5. The method according to claim 4, wherein the determining, based on the serial numbers of the n qubits, a first quantum circuit for the reference diagonal unitary matrix comprises:

determining a matching CNOT gate of a $j^{th}$ first qubit sequence based on the serial numbers of the n qubits, j being a positive integer that increases sequentially, and $1 \leq j \leq 2^{n-1} - 1$;

constructing, based on a $(j+1)^{th}$ first qubit sequence, a matching R quantum gate that is applied after the matching CNOT gate of the $j^{th}$ first qubit sequence;

connecting $2^{n-1} - 1$ matching CNOT gates and $2^{n-1} - 1$ matching R quantum gates alternately in a case that j reaches $2^{n-1} - 1$, to obtain a candidate sub-circuit;

determining a supplementary R quantum gate and a supplementary CNOT gate, and connecting the supplementary R quantum gate and the supplementary CNOT gate, to obtain a supplementary sub-circuit; and

determining the first quantum circuit based on the candidate sub-circuit and the supplementary sub-circuit.

6. The method according to claim 5, wherein

the supplementary R quantum gate is determined based on the first qubit sequence, a control qubit of the supplementary CNOT gate is a qubit with the serial number 1, and a target qubit of the supplementary CNOT gate is a qubit with the serial number n; and

a serial number of a control qubit of the matching CNOT gate of the $j^{th}$ first qubit sequence is calculated based on n and j, and a target qubit of the matching CNOT gate of the $j^{th}$ first qubit sequence is the qubit with the serial number n.

**7.** The method according to claim 4, wherein the determining, based on the serial numbers of the n qubits, a second quantum circuit for the reference diagonal unitary matrix comprises:

determining a to-be-implemented diagonal unitary matrix corresponding to the reference diagonal unitary matrix, the to-be-implemented diagonal unitary matrix corresponding to n-1 qubits;

decomposing the to-be-implemented diagonal unitary matrix by using a transformation circuit, to obtain a substitute diagonal unitary matrix, the transformation circuit being configured to substitute quantum states in a first qubit set corresponding to the to-be-implemented diagonal unitary matrix for quantum states in a second qubit set;

determining, based on the serial numbers of the n qubits, a substitute quantum circuit for the substitute diagonal unitary matrix; and

determining a connection result of the transformation circuit, the substitute quantum circuit, and an inverse transformation circuit corresponding to the transformation circuit as the second quantum circuit, the inverse transformation circuit being configured to substitute the quantum states in the second qubit set for the quantum states in the first qubit set.

**8.** The method according to claim 4, wherein the generating a plurality of qubit sequences for the reference diagonal unitary matrix comprises:

determining a to-be-flipped qubit of a $j^{th}$ qubit sequence, and flipping an element on the to-be-flipped qubit, to obtain a $(j+1)^{th}$ qubit sequence, $2 \le j \le 2^{n-1}$, and the first qubit sequence being obtained by arranging n-1 second elements; and

determining $2^{n-1}$ qubit sequences as the plurality of qubit sequences for the reference diagonal unitary matrix in a case that a value of j reaches $2^{n-1}$.

**9.** The method according to claim 3, wherein the determining, under the constraints of the connected graph, respective serial numbers of the n qubits comprises:

extracting a target tree from the connected graph, the target tree being an arbitrary spanning tree in the connected graph, and each qubit corresponding to a respective node in the target tree;

numbering each node in the target tree, to obtain a serial number of the each node; and

determining the serial number of the each node as a serial number of a respective qubit corresponding to the each node.

**10.** The method according to claim 9, wherein the numbering each node in the target tree, to obtain a serial number of the each node comprises:

generating an initial serial number for each node in the target tree; and

in a case that the node with the serial number n-k+2 does not have a child node or does not have a child node with the initial serial number, searching numbered nodes for a first node that matches a search criterion and determining a serial number of a leftmost child node of the first node as n-k+1,

the search criterion being a node with a largest serial number and has a child node with the initial serial number, $3 \le k \le n$, the node with the serial number n being a root node of the target tree, and the node with the serial number n-1 being a leftmost node of the root node;

in a case that the node with the serial number n-k+2 has a child node with the initial serial number, determining a serial number of a leftmost child node of the child node with the initial serial number as n-k+1.

**11.** A quantum circuit optimization apparatus, the apparatus comprising:

a matrix decomposition module, configured to: transform a to-be-optimized quantum circuit into a to-be-processed unitary matrix, and decompose the to-be-processed unitary matrix iteratively, to obtain a first quantity of qubit uniformly controlled gates;

a controlled gate decomposition module, configured to decompose each qubit uniformly controlled gate into a second quantity of qubit diagonal unitary matrices and a third quantity of single-qubit gates;

a circuit implementation module, configured to determine, under constraints of a connected graph, a respective matching quantum circuit for each qubit diagonal unitary matrix; and

a connection and integration module, configured to: integrate the second quantity of matching quantum circuits and the third quantity of single-qubit gates, to obtain a respective quantum circuit for the each qubit uniformly controlled gate, and connect the first quantity of quantum circuits, to obtain an optimized quantum circuit.

12. A quantum computing device, the quantum computing device comprising an optimized quantum circuit, and the optimized quantum circuit being implemented by using the quantum circuit optimization method according to any one of claims 1 to 10.

13. An electronic device, the electronic device comprising:

a memory, configured to store executable instructions; and

a processor, configured to implement the quantum circuit optimization method according to any one of claims 1 to 10 when executing the executable instructions stored in the memory.

14. A computer-readable storage medium, storing executable instructions, the executable instructions implementing the quantum circuit optimization method according to any one of claims 1 to 10 when being executed by a processor.

15. A computer program product, comprising a computer program or instructions, the computer program or the instructions implementing the quantum circuit optimization method according to any one of claims 1 to 10 when being executed by a processor.

Constraints of a path
1-1

Constraints of a tree
1-2

Constraints of a brick
wall shape 1-3

FIG. 1

EP 4 401 012 A1

Quantum circuit
optimization system
100

Quantum circuit
optimization

Server 200

To-be-optimized
quantum circuit
and optimized
quantum circuit

Network 300

To-be-optimized
quantum circuit

Optimized
quantum circuit

To-be-
optimized
quantum
circuit

Terminal 400

Quantum
computing
device 500

FIG. 2

Server 200

Memory 250

| Operating system 251 |
| --- |
| Network communication module 252 |
| Quantum circuit optimization apparatus 255 |

Network interface 220

Processor 210

240

| Matrix decomposition module 2551 |
| --- |
| Controlled gate decomposition module 2552 |
| Circuit implementation module 2553 |
| Connection and integration module 2554 |

**FIG. 3**

Transform a to-be-optimized quantum circuit into a to-be-processed unitary matrix, and decompose the to-be-processed unitary matrix iteratively, to obtain a first quantity of qubit uniformly controlled gates — S101

Decompose each qubit uniformly controlled gate into a second quantity of qubit diagonal unitary matrices and a third quantity of single-qubit gates — S102

Determine, under constraints of a connected graph, a respective matching quantum circuit corresponding to each qubit diagonal unitary matrix — S103

Integrate the second quantity of matching quantum circuits and the third quantity of single-qubit gates, to obtain a respective target quantum circuit for the each qubit uniformly controlled gate — S104

Connect the first quantity of target quantum circuits, to obtain an optimized quantum circuit — S105

**FIG. 4**

FIG. 5

FIG. 6

FIG. 7

$V_3^{[2]}$  $V_2^{\{1,3\}}$  $V_3^{[2]}$  $V_1^{\{2,3\}}$  $V_3^{[2]}$  $V_2^{\{1,3\}}$  $V_3^{[2]}$

FIG. 8

Determine, under constraints of a connected graph, serial numbers respectively corresponding to n qubits — S1031

Extract a reference diagonal unitary matrix from a qubit diagonal unitary matrix based on the serial numbers of the n qubits — S1032

Determine, based on the serial numbers of the n qubits, a reference quantum circuit corresponding to the reference diagonal unitary matrix — S1033

Transform the reference quantum circuit by using a controlled-NOT (CNOT) gate, to obtain a transformation quantum circuit corresponding to a remaining diagonal unitary matrix — S1034

Determine the reference quantum circuit corresponding to the reference diagonal unitary matrix and the transformation quantum circuit corresponding to the remaining diagonal unitary matrix as a matching quantum circuit corresponding to the qubit diagonal unitary matrix — S1035

FIG. 9

| Generate a plurality of qubit sequences for a reference diagonal unitary matrix | S1033a |

| Add a first element to the end of each qubit sequence to obtain a plurality of first qubit sequences, and add a second element to the end of each qubit sequence to obtain a plurality of second qubit sequences | S1033b |

| Determine, based on the serial numbers of n qubits, a first quantum circuit corresponding to the reference diagonal unitary matrix | S1033c |

| Determine, based on the serial numbers of the n qubits, a second quantum circuit corresponding to the reference diagonal unitary matrix | S1033d |

| Determine, based on the first quantum circuit and the second quantum circuit, a reference quantum circuit corresponding to the reference diagonal unitary matrix | S1033e |

FIG. 10

FIG. 11

Connected
graph G

Spanning
tree T

FIG. 12

FIG. 13

## INTERNATIONAL SEARCH REPORT

International application No.

**PCT/CN2023/096212**

| A. CLASSIFICATION OF SUBJECT MATTER |
|---|
| G06N 10/20(2022.01)i;  G06N 10/60(2022.01)i;  G06N 10/40(2022.01)i |

According to International Patent Classification (IPC) or to both national classification and IPC

| B. FIELDS SEARCHED |
|---|

Minimum documentation searched (classification system followed by classification symbols)

IPC:  G06N

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; EPTXT: 量子电路, 优化, 酉矩阵, 分解, 对角, 比特, 门, 整合, 连接, 连通图, quantum circuit, optimization, unitary matrix, decomposition, diagonal, qubit, connection, connected graph

| C. DOCUMENTS CONSIDERED TO BE RELEVANT |
|---|

| Category* | Citation of document, with indication, where appropriate, of the relevant passages | Relevant to claim No. |
|---|---|---|
| Y | CN 113592093 A (TENCENT TECHNOLOGY (SHENZHEN) CO., LTD.) 02 November 2021 (2021-11-02) description, paragraphs [0038]-[0278] | 1, 2, 11-15 |
| Y | CN 113592094 A (TENCENT TECHNOLOGY (SHENZHEN) CO., LTD.) 02 November 2021 (2021-11-02) description, paragraphs [0072]-[0185] | 1, 2, 11-15 |
| A | CN 111563599 A (HEFEI ORIGIN QUANTUM COMPUTING TECHNOLOGY CO., LTD.) 21 August 2020 (2020-08-21) entire document | 1-15 |
| A | CN 111738448 A (BEIJING BAIDU NETCOM SCIENCE AND TECHNOLOGY CO., LTD.) 02 October 2020 (2020-10-02) entire document | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 July 2023** | **03 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | International application No. |
| Information on patent family members | **PCT/CN2023/096212** |

| Patent document cited in search report | | | Publication date (day/month/year) | Patent family member(s) | | | Publication date (day/month/year) |
|---|---|---|---|---|---|---|---|
| CN | 113592093 | A | 02 November 2021 | CN | 113592093 | B | 24 May 2022 |
| | | | | HK | 40055372 | A0 | 11 March 2022 |
| | | | | HK | 40055372 | A1 | 12 August 2022 |
| | | | | WO | 2023010694 | A1 | 09 February 2023 |
| | | | | US | 2023081903 | A1 | 16 March 2023 |
| | | | | EP | 4152215 | A1 | 22 March 2023 |
| CN | 113592094 | A | 02 November 2021 | CN | 113592094 | B | 07 June 2022 |
| | | | | HK | 40055370 | A0 | 11 March 2022 |
| | | | | HK | 40055370 | A1 | 26 August 2022 |
| | | | | WO | 2023010684 | A1 | 09 February 2023 |
| | | | | US | 2023080222 | A1 | 16 March 2023 |
| | | | | EP | 4152216 | A1 | 22 March 2023 |
| CN | 111563599 | A | 21 August 2020 | | None | | |
| CN | 111738448 | A | 02 October 2020 | CN | 111738448 | B | 28 September 2021 |
| | | | | US | 2021397772 | A1 | 23 December 2021 |
| | | | | AU | 2020289854 | A1 | 20 January 2022 |
| | | | | AU | 2020289854 | B2 | 10 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210885994